# EUROPEAN PATENT SPECIFICATION

(11) **EP 2 595 047 B1**
(45) Date of publication and mention of the grant of the patent: **13.06.2018**
(21) Application number: 12193278.4
(22) Date of filing: 19.11.2012
(51) Int. Cl.: G06F 3/0488, G06F 3/023, G06F 3/01

(54) **Method and apparatus for inputting character in touch device**
Verfahren und Vorrichtung zur Eingabe von Zeichen in eine Berührungsvorrichtung
Procédé et appareil pour entrer un caractère dans un dispositif tactile

(30) Priority: 18.11.2011 KR 20110121142
(43) Date of publication of application: 22.05.2013
(73) Proprietor: Samsung Electronics Co., Ltd., Gyeonggi-do 443-742 (KR)
(72) Inventor: Park, Sehwan, 443-742 Gyeonggi-do (KR); Lee, Dongyeol, 443-742 Gyeonggi-do (KR); Park, Sungwook, 443-742 Gyeonggi-do (KR); Lee, Jaeyong, 443-742 Gyeonggi-do (KR); Kim, Jihoon, 443-742 Gyeonggi-do (KR); Lêe, Jihoon, 443-742 Gyeonggi-do (KR)
(74) Representative: HGF Limited

(56) References cited:
- KR-A- 20100 048 434
- US-A1- 2011 225 529
- itversmilgeegle: "????? ??? ???? - ???", , 13 July 2010 (2010-07-13), page 1, XP054976314, Retrieved from the Internet: URL:https://www.youtube.com/watch?v=mhgxc9 TyIE0 [retrieved on 2016-01-21] & "YouTube Video: 터치스크린 최고의 문자입력 -밀기글", , 13 July 2010 (2010-07-13), XP055244432, Retrieved from the Internet: URL:https://www.youtube.com/watch?v=mhgxc9 TyIE0 [retrieved on 2016-01-25]

## Description

### BACKGROUND OF THE INVENTION

### 1. Field of the Invention

The present invention relates generally to a method and apparatus for inputting a character, and more particularly, to a method and apparatus for inputting a character in a touch device supporting touch-based input by supporting various character inputs according to a gesture input from of a user.

### 2. Description of the Related Art

Recently, with the development of digital technology, various devices such as Personal Digital Assistants (PDAs), electronic organizers, smart phones, tablet Personal Computers (PCs), etc., that process communication and personal information while a user is moving have been introduced. Such mobile devices include various functions such as mobile calling functions, electronic organizer functions, document viewing/editing functions, e-mail functions, Internet functions, Social Networking Service (SNS) functions, as well as initial simple voice call and Short Message Service (SMS) transmission functions.

A user of such devices may execute functions and input characters into the mobile device using a certain object (e.g., finger, pointer, etc.) on the touch screen. In recent years, there has been active research regarding character input methods using the touch screen.

When using a function requiring character input such as message creation, document creation, or e-mail creation in a mobile device including a touch screen, character input is inconvenient, due to a narrow space provided for character input on the mobile device. For example, since all buttons of a keyboard for character input are arranged in a narrow space, space for inputting separate characters is very narrow. Accordingly, it is difficult to input a button of the keyboard intended by the user, and accordingly, there is a significant amount of character input errors, which increases the overall numbers of characters that must be input by the user.

KR 2010 0048434 A describes a technique for inputting Korean characters. Another technique for inputting Korean characters is disclosed at https://www.youtube.com/watch?v=mhgxc9TyIE0. US 2011/225529 A1 describes a technique for inputting text in a portable device.

### SUMMARY OF THE INVENTION

The present invention has been made to address the above-described problems and provide at least the advantages described below. According to an aspect of the present invention, a method for inputting a character in a touch device supporting touch-based input capable of improving convenience of character input and an apparatus thereof are provided.

The present invention further provides a method for inputting a character in a touch device which minimizes the input number of the characters by the user such that the user may simply and rapidly input a desired character and an apparatus thereof.

The present invention further provides a method for inputting a character in a touch device which allows a user to distinctly input a character form of a second character group according to an input scheme of a user gesture with respect to the second character group not displayed on a key pad in a state that only a first character group is arranged and displayed on a virtual key pad provided from the touch device when the character is inputted in the touch device, and an apparatus thereof.

The present invention further provides a method for inputting a character in the touch device capable of supporting various character inputs based on a transformation interrupt transforming an input scheme of a user gesture and an apparatus thereof.

The present invention further provides a method for inputting a character in a touch device capable of improving convenience for a user, usability of the touch device, and competitive force of the touch device by implementing an optimal environment for supporting a character input function of a user, and an apparatus thereof.

In accordance with an aspect of the present invention, there is provided a method for inputting a character, the method comprising: displaying, when a touch interaction based on a user gesture is input to a certain character region in a character input mode, a first character to which the certain character region is allocated; receiving, after the touch interaction is initiated and while the touch interaction is maintained, a drawing interaction which is a movement in a first heading direction; generating a first complete character by combining a second character according to the drawing interaction with a first character allocated to the character region; displaying the generated first complete character in a form of a preview; detecting a conversion interaction which is an interrupt that changes a heading direction of the drawing interaction while the generated first completed character is displayed; generating a second complete character by combining a third character according to the conversion interaction with the first character allocated to the character region; displaying the generated second complete character in a form of a preview by substituting the generated second complete character for the displayed first complete character; and processing, when the user gesture is released while displaying the generated second complete character, the second complete character as a completely input character.

Certain exemplary embodiments provide a computer-readable recording medium on which a program for executing the method in a processor is recorded.

In accordance with another aspect of the present invention, there is provided a touch device comprising: a touch screen including a touch input region for inputting a character and a display region for displaying the input character; and a controller for: selecting a character of a first character group allocated to a certain character region when a touch interaction based on a user gesture is input to the certain character region; receiving, after the touch interaction is initiated and while the touch interaction is maintained, a drawing interaction which is a movement in a first heading direction; generating a first complete character by combining a second character according to the drawing interaction with a first character allocated to the character region; controlling the display of the generated first complete character in a form of a preview; detecting a conversion interaction which is an interrupt that changes a heading direction of the drawing interaction while the generated first completed character is displayed; generating a second complete character by combining a third character according to the conversion interaction with the first character allocated to the character region; controlling the display of the generated second complete character in a form of a preview by substituting the generated second complete character for the displayed first complete character; and processing, when the user gesture is released while displaying the generated second complete character, the second complete character as a completely input character.

### BRIEF DESCRIPTION OF THE DRAWINGS

The objects, features and advantages of the present invention will be more apparent from the following detailed description in conjunction with the accompanying drawings, in which:
FIG. 1 is a block diagram schematically illustrating a configuration of a touch device according to an embodiment of the present invention;
FIG. 2 is a diagram illustrating an example of a screen interface for supporting character input in a touch device according to an embodiment of the present invention;
FIGs. 3 to 6 are diagrams illustrating examples for describing a character input operation using gesture input in a touch device according to an embodiment of the present invention;
FIG. 7 is a diagram illustrating a character input operation in a touch device according to an embodiment of the present invention;
FIG. 8 is a diagram illustrating an example of an operation of initializing character input in progress during an character input operation in a touch device according to an embodiment of the present invention;
FIGs. 9A to 9C are diagrams illustrating examples of a screen for describing a character input operation in a touch device according to an embodiment of the present invention;
FIG. 10 is a diagram illustrating another example of a character input scheme in a touch device according to an embodiment of the present invention;
FIG. 11 is a diagram illustrating an example of an operation when an auxiliary vowel key in a touch device according to an embodiment of the present invention;
FIG. 12 is a flowchart illustrating a method for inputting a character in a touch device according to an embodiment of the present invention; and
FIG. 13 is a flowchart illustrating a method for initializing character input in a touch device according to an embodiment of the present invention.

### DETAILED DESCRIPTION OF EMBODIMENTS OF THE PRESENT INVENTION

Embodiments of the present invention are described as follows with reference to the accompanying drawings in detail. The same reference numbers are used throughout the drawings to refer to the same or similar parts. Detailed descriptions of well-known functions and structures incorporated herein may be omitted to avoid obscuring the subject matter of the present invention.

An embodiment of the present invention relates to a method and apparatus for inputting a character that supports simple and rapid character input in a touch device supporting touch-based input. According to an embodiment of the present invention, a first character is selected in response to a first interaction for character input, when the first interaction is input in a character input mode. Further, a second character is selected in response to a second interaction continued after the first interaction when the second interaction is input. Next, a full character that is a combination of the first character and the second character is created and displayed.

The first interaction is a touch interaction input to a certain character region of a virtual touch keypad, which may correspond to a user gesture start point. The character region corresponds to a first character group (e.g., consonant group). While the first character group according to user setting is arranged on the touch key pad, a second character group (e.g., vowel group) combined by a user gesture may be omitted on the touch key pad.

Further, the second interaction includes interactions such as a gesture-based interaction having at least one of a drawing interaction moving the first interaction in a predetermined direction in a state that the first interaction being a starting point of a user gesture remains, and a conversion interaction of either converting and moving the drawing interaction from an advance direction of the drawing interaction to another direction (e.g., opposite direction, diagonal direction, vertical direction) or extending and moving the drawing interaction in a predetermined direction after the drawing interaction stops at a certain point for a preset time during movement in the predetermined direction.

The conversion interaction corresponds to an extended line of the drawing interaction, and is divided into a first conversion interaction, a second conversion interaction, an N-th interaction. Each of the first conversion interaction to the N-th conversion interaction may be classified at a generation time point of a conversion interrupt, as a heading direction is changed in a certain conversion point. This classification is described in detail herein with reference to following drawings.

Accordingly, a first character of the character region is selected according to the touch interaction, a second character (e.g., first vowel) according to the drawing interaction is combined with the first character (e.g., certain vowel) when the drawing interaction is input after the touch interaction to generate a first complete character, and the first complete character is displayed in the form of a preview. When the drawing interaction is released at a generated time point of the first complete character, the first complete character may be expressed on a display region. When the drawing interaction is converted into the conversion interaction while the first complete character according to the drawing interaction is displayed in the form of a preview, the present invention combines a third character (e.g., a second vowel) according to the conversion interaction with the first character (e.g., a certain consonant) to generate a second complete character, and the second completed character is displayed in the form of a preview. More specifically, the first complete character of the preview is converted into a second complete character that is a combination of the first character and the third character, and the second complete character is displayed. Such a complete character may be continuously converted into another complete character according to an achievement degree of the conversion interaction. Input from a first character to a final combinable completed character according to a conversion interaction may be continuously performed.

For example, when a first character according to the first interaction is "¬" and a second character according to a drawing interaction of the second interaction is "├", a first complete character " 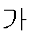 ", which is a combination of the first character "¬" and the second character "├", is generated and displayed in the form of a preview. When the user generates the first complete character " 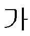 " as described above, and then releases the drawing interaction, the preview of the first complete character is removed and the first complete character is input and displayed.

When the first complete character " 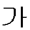 " is displayed and the drawing interaction remains, the drawing interaction is converted into a first conversion interaction of the second interaction based on a first certain conversion point, and a third character according to the first conversion interaction is " 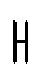 ", the second complete character " 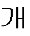 ", which is a combination of the first character "¬" and third character 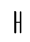 , is be generated and displayed in the form of a preview. When the user generates the second complete character " 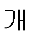 " and then releases the first conversion interaction, a preview of the second complete character is removed and the second complete character is input and displayed.

When the second complete character " 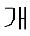 " is displayed, the first conversion interaction is converted into a second conversion interaction based on a second certain point in a maintained state of the first conversion interaction, and a fourth character according to the second conversion interaction is "⊨", a third complete character " 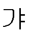 ", which is a combination of a first character "¬" and the fourth character "⊨", is generated and displayed in the form of a preview. When the user generates the third complete character " 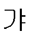 " and then releases the second conversion interaction, the preview of the third complete character is removed and the third complete character is input and displayed.

When the third complete character " 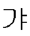 " is displayed and the second conversion interaction is converted into the third conversion interaction based on a third certain conversion point in a maintained state of the second conversion interaction, and a fifth character according to the third conversion interaction is " 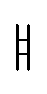 ", a fourth complete character " 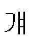 ", which is a combination of the first character "¬" and the fifth character " 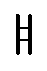 ", is generated and displayed in the form of a preview. When the user generates a fourth complete character 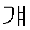 "" and then releases the third conversion interaction, the preview of the fourth complete character is removed and the fourth complete character is input and displayed.

As described above, when a conversion interaction extending and inputting the drawing interaction after the first complete character " 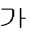 " stops at a certain conversion point for a predetermined time in a displayed state is input, another complete character " 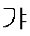 " or " 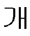 " may be generated and displayed. In this case, another complete character " 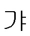 " or " 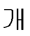 " is generated by adding a stroke to the first complete character according to the conversion interaction. Characters of a second character group combined with characters of a first character group according to a first interaction may be determined and provided according to a driving interaction and a conversion interaction of the second interaction or be newly defined and provided according to user setting. When a character is input to the touch device, while only a first character group is arranged and displayed on a virtual touch key pad provided from the touch device, a character type of a second character group that is not indicated on a key pad may be distinctly input according to an input user gesture. Other characters corresponding to the user gesture may be input according to a conversion interrupt changing a heading direction of the user gesture while inputting a certain character of the second character group according to a user gesture input based on a certain character button of the first character group.

Meanwhile, although embodiments of the present invention are described with reference to Hanguel characters as a representative example, the present invention is not limited to a character input scheme of Hanguel characters. More specifically, the present invention is applicable to character input with respect to various languages having a language format including characters that are divided into at least two characters such as a consonant group and a vowel group.

Hereinafter, a configuration of a touch device according to an embodiment of the present invention and an operation method thereof is described with reference to following drawings.

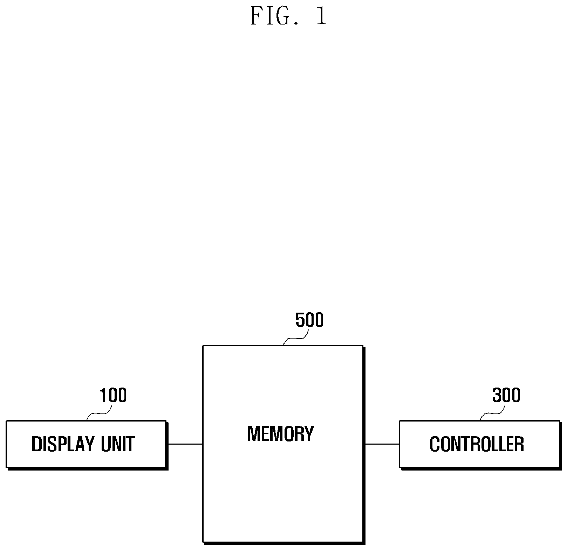

FIG. 1 is a block diagram schematically illustrating a configuration of a touch device according to an embodiment of the present invention.

Referring to FIG. 1, a touch device according to an embodiment of the present invention includes a display unit 100, a memory 300, and a controller 500. A portable terminal according to embodiments of the present invention may include other elements, such as an audio processor with a microphone and a speaker, a digital broadcasting module for receiving digital broadcasting (mobile broadcasting such as Digital Multimedia Broadcasting (DMB) or Digital Video Broadcasting (DVB)), a camera module for photographing a static image and a dynamic image of a subject, at least one near distance communication module such as Bluetooth communication, Infrared Data Association (IrDA) communication, Radio Frequency Identification (RFID) communication, Near Field Communication (NFC) for supporting a communication function based on near distance wireless communication, a Radio Frequency (RF) module for supporting a communication function such as voice call, image call, and data call based on mobile communication, a communication module for supporting an Internet communication service based on an Internet Protocol (IP), and a battery for supplying power to the foregoing elements, etc. (not shown).

The display unit 100 displays an operation state of the touch device and a screen associated with performing operations of the touch device. For example, the display unit 100 displays screens such as a home screen of a touch device, an execution screen associated with a character input mode, or respective execution screen according to executions of various applications. Further, the display unit 100 may include an interface supporting touch-based input. For example, the display unit 100 supports a touch based on user interaction input by a touch screen arrangement and create and transfer an input signal according to the user input to the controller 500.

In particular, the display unit 100 may provide a touch input region providing a soft type touch key pad for character input in a character input mode and a display region displaying a character input through the touch input region. When such a touch input region is provided, a touch keypad (e.g., a touch key pad of a layout in which only consonants are arranged in a case of Hanguel) that excludes certain characters (e.g., phonemes) allocated as event input of a user in a native language may also be provided. In addition, according to embodiments of the present invention, the touch keypad may express a complete character generated according to user gestures input in the form of a preview. An example of a screen with respect to the touch keypad is described herein below. When a screen according to the character input mode is displayed, the display unit 100 supports a screen display according to a landscape mode in a rotation direction (or put direction) of the touch device, screen a display according to a transverse mode, and adaptive screen conversion display according to variation between the landscape mode and the transverse mode.

The memory 300 stores various applications and data executed and processed by the touch device, and includes at least one volatile memory and non-volatile memory. The volatile memory may include a Random Access Memory (RAM), and the non-volatile memory may include a Read Only Memory (ROM). Further, the memory 300 may continuously or temporarily store an operating system of the touch device, programs and data associated with a display control operation of the display unit 100, programs and data associated with an input control operation using the display unit 100, and programs and data associated with a character input function operation of the touch device. In particular, the memory 300 stores certain characters and mapping information to which a character according to a user gesture input scheme for inputting the stored characters is mapped. The mapping information may be defined during manufacturing the touch device or by the user.

The controller 500 controls overall operations of the touch device. The controller 500 controls operations associated with a character input function operation of the touch device. The controller 500 classifies a touch interaction corresponding to a first interaction of a user in an input mode, a drawing interaction and a conversion interaction corresponding to a second interaction, and input a character or a combined character corresponding to each interaction. When a user gesture based touch interaction is input to a certain character region in a character input mode, the controller 500 selects characters of a first character group allocated to the character region. When movement of the user gesture is detected after the touch interaction, characters of a second character group according to an input scheme of the user gesture are combined with the selected characters of the first character group to control display of the combined characters.

For example, the controller 500 selects a first character allocated to the character region according to a touch interaction using a certain character region of the touch input region, generates a first complete character from a combination of the first character and the second character according to the drawing interaction input after the touch interaction in response to the drawing interaction, and expresses the first complete character on the touch input region or a display region in the form of a preview. When the first complete character is indicated in the form of a preview, and a conversion interaction converting the drawing interaction at a certain conversion point is continuously input in a maintained state of input of the drawing interaction, the controller 500 generates a second complete character from a combination of the first character and a third character according to the conversion interaction, and substitutes the second complete character for the first complete character indicated on the touch input region or a display region in the form of a preview. As described above, if a release of the touch interaction, the drawing interaction, or the conversion interaction is detected, the controller 500 controls display of a complete character when the corresponding interaction is released. That is, the controller 500 controls a series of operations of distinctly inputting a character type of a second character group according to an input scheme of a user gesture with respect to characters that are not indicated on a key pad, when only a first character group is arranged and indicated on a virtual touch keypad. Further, the controller 500 controls input of another character with respect to the user gesture according to a conversion interrupt changing a heading direction of the user gesture while inputting a certain character of a second character group according to user gesture input based on a certain character button of the first character group.

Meanwhile, touch interactions according to embodiments of the present invention include an interaction touching a character region to which a certain character of a touch key pad is allocated, a drawing interaction indicating an interaction moving the touch interaction inputted to a character region in one direction in a maintained state, and a conversion interaction switching a direction of the drawing interaction moved in one direction to a direction other than the one direction in a switch point and moving the switched drawing interaction by a predetermined distance. A character input scheme according to each interaction will be described with reference to following drawings.

Further, according to embodiments of the present invention, the controller 500 controls a toggle function with respect to a character input scheme. For instance, when a toggle event (e.g., event in which a space key is input for more than a predetermined time) by a certain key (e.g., space key) of a touch key pad occurs in a character input mode, the controller 500 changes a character input scheme and displays an indication of the changed character input scheme. A character input scheme may include a scheme of displaying a character of a corresponding character button and a combinable expected character around the character button when a certain character button is input and combining and inputting selected characters based thereon, as well as a user gestured based input scheme according to embodiments of the present invention. Accordingly, the controller 500 controls conversion with respect to various character input schemes supported by a touch device having a toggle function, and intuitively indicates that a character input scheme is converted on a touch keypad (e.g., space key) during supporting a conversion function using an icon and an item.

An example of an operation of a touch device and a control method thereof is described herein with reference to following drawings with respect to a detail control operation of the controller 500 as illustrated above. The controller 500 controls various operations associated with a typical function of the touch device as well as the foregoing functions. For example, the controller 500 controls an operation of a certain application during execution of the certain application and screen display. Further, the controller 500 receives an input signal corresponding to various event input schemes supported from a touch-based input interface and a corresponding function operation. Furthermore, the controller 500 controls transmission and reception of various data based on wired communication or wireless communication.

Meanwhile, the touch device of FIG. 1 is applicable to various types of devices such as bar type, folder type, slide type, swing type, and flip type devices. Further, examples of such touch devices include various information and communication devices, multi-media devices and application devices thereof supporting a touch-based character input function of the present invention. For example, the touch device may be a tablet Personal Computer (PC), a Smart Phone, a digital camera, a Portable Multimedia Player (PMP), a Media Player, a portable game terminal, and a Personal Digital Assistant (PDA) as well as a mobile communication terminal operating based on respective communication protocols corresponding to various communication systems. Further, a character input method according to embodiments of the present invention may be applied and operated to a display device supporting touch-based input such as a Digital Television (TV), a Digital Signage (DS), or a Large Format Display (LFD).

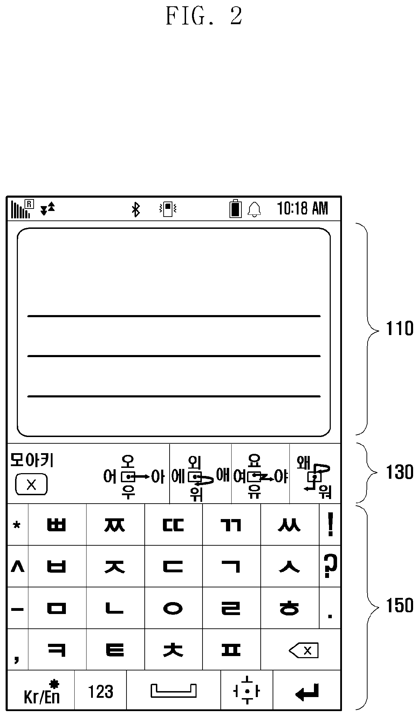

FIG. 2 is a diagram illustrating an example of a screen interface for supporting character input in a touch device according to an embodiment of the present invention. In particular, FIG. 2 illustrates an example of a screen interface displayed on the display unit 100 when a character input mode is activated.

Referring to FIG. 2, a screen interface according to a character input mode according to an embodiment of the present invention is classified into a display area 110, a guide area 130, and a touch input area 150. The display region indicates a region displaying characters corresponding to character input of the user. In particular, the display region 110 displays characters combined according to a user gesture based-input, and may indicate a combined character in one region in the form of a preview.

The guide region 130 is a selectively provided region, and provides a guide with respect to operations for inputting a user gesture. For example, the guide region 130 may provide an image or a text with respect to an example of a character generated according to a scheme of inputting the user gesture.

The touch input region 150 indicates a region from a virtual touch keypad supported by the touch device. The touch input region 150 may be classified into a character region of a first character group (e.g., a consonant group), a specific character region and a plurality of function regions frequently used by the user. The specific character region may be arranged in a peripheral region of a touch keypad for convenience of user gesture input of the present invention. The function region includes a first function region for language conversion (e.g., Korean-English conversion), a second function region for numeral and signal conversion, a space region for a space function, an enter region for an enter function, and an erase region for an erase function. In this case, the present invention may support a toggle function with a character input scheme using a button of the space region.

In particular, as illustrated in FIG. 2, the touch input region 150 arranges and indicates only a first character group on a key pad, and without arrangement with respect to a second character group combined with corresponding characters of the first character group. Further, the touch input region 150 classifies a type of the second character group according to an input scheme of a user gesture with respect to a second character group that is not indicated on the touch keypad to generate a complete character combined with a character selected from the first character group, and to indicate the complete character on one region in the form of a preview.

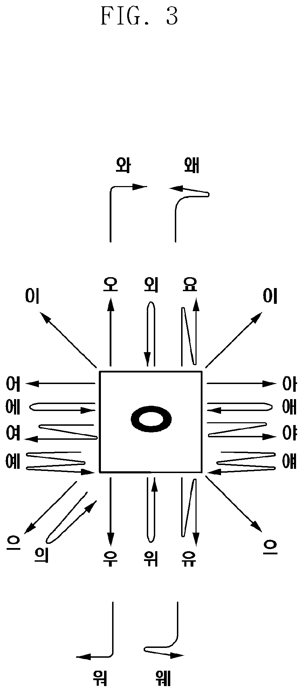

FIG. 3 is a diagram illustrating an example of a character input scheme in a touch device according to an embodiment of the present invention. In particular, FIG. 3 illustrates an example of a character input scheme using a user gesture to be inputted based on a certain character region (e.g., " 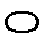 " character region) of a first character group (e.g., consonant group) provided from a touch key pad of the touch device according to an embodiment of the present invention.

Referring to FIG. 3, an example of an operation of inputting a certain character (e.g., vowel group of Hanguel) according to user gesture input of the user is depicted. In FIG. 3, the user gesture is an action for inputting a first interaction selecting a certain character region on a touch keypad, and then performing a second interaction in a certain direction. The selected certain character of the Hanguel vowel group indicates a defined character not indicated on the touch keypad.

As shown in FIG. 3, the user inputs a second interaction (i.e., a drawing interaction) (e.g., move interaction, drag interaction, flick interaction, etc.) by moving from the first interaction in a peripheral direction (e.g., upward, downward, left, right, diagonal direction) in a state that the first interaction (touch interaction) is input to a character region to which a certain character (e.g., " 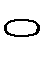 ") of a first character group provided on the touch key pad is allocated. Accordingly, a combined character of a corresponding character (e.g., certain vowel group of Hanguel, ├, ┤, ┴, ┬, —, |) previously mapped to a corresponding heading direction of the conversion interaction and the certain character (e.g., " 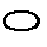 ").

For example, in the example of FIG. 3, a " 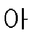 ", which is a combination of "├" mapped in the heading direction and a certain character " 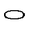 ", is input according to a drawing interaction heading in a rightward direction. Further, a " 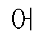 ", which is a combination of "┤" mapped in the heading direction and " 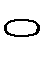 ", is input according to a drawing interaction heading in a left direction. Moreover, a " 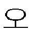 ", which is a combination of "┴" mapped in the heading direction and " 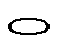 " may be inputted according to a drawing interaction heading in an upward direction. In addition, a " 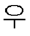 ", which is a combination of "┬" mapped in the heading direction and " 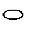 ", is input according to a drawing interaction heading in a downward direction. A " 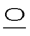 ", which is a combination of "—" mapped in the heading direction and " 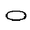 ", is input according to a drawing interaction heading in a left lower diagonal direction or a right lower diagonal direction. A " 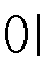 ", which is a combination of "|" mapped in the heading direction and " 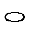 ", is input according to a drawing interaction heading in a left upper diagonal direction or a right upper diagonal direction.

Meanwhile, according to an embodiment of the present invention a vowel group is classified into a leftward direction vowel group, a rightward direction vowel group, an upward direction vowel group, a upward diagonal direction vowel group, and a downward diagonal direction vowel group according to a shape of Hanguel vowel and a direction of a stroke. For example, when a user inputs a drawing interaction moving a point touched on a character region in a left direction, a "┤" may be input. When the user inputs a drawing interaction moving the point touched on the character region in a rightward direction, a "├" may be input. When the user inputs a drawing interaction moving the point touched on the character region in an upward direction, a '┴' may be input. When the user inputs a drawing interaction moving the point touched on the character region in a downward direction, a "┬" may be inputted. When the user inputs a drawing interaction moving the point touched on the character region in a right upper diagonal (or left upper) direction, a "|" may be inputted. When the user inputs a drawing interaction moving the point touched on the character region in a left lower diagonal (or right lower) direction, a "—" may be inputted.

Accordingly, a vowel group of a character may be identified with respect to a corresponding direction according to whether a location of a point "•" of a vowel is in any direction in vowel "|" or "—". For example, since a location of "•" is indicated in the right side of "|", "├" may be designated as a vowel group in a rightward direction of "|". Similarly, since a location of "•" is indicated in the left side of "|", "┤" may be designated as a vowel group in a left direction of "|". In the same manner, because a location of "•" is indicated in an upper side of "—", "┴" may be designated as a vowel group in an upward direction of "—". Since a location of "•" is indicated in a lower side of "—", "┬" may be designated as a vowel group in a downward direction of "—". As described above, a vowel capable of being input using a drawing interaction based on a direction to classify the vowel as a certain group is defined and enlarged, which allows a user to intuitively understand learning with respect to character input. The character input may be determined according to an input scheme of a language (e.g., Hanguel) of a corresponding character.

After the vowel is defined, the user may input a second interaction (conversion interaction) (e.g., a move interaction, a drag interaction, a flick interaction, etc.) switching to a direction (e.g., an opposite direction, a vertical direction, a diagonal direction, etc.) other than a heading direction of the drawing interaction and moving to a corresponding direction in a state that the drawing interaction (e.g., a move interaction, a drag interaction, etc.) of the second interaction is input. Accordingly, the user may input a character that is a combination of a corresponding character (e.g., certain vowel group of Hanguel, 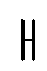 , 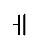 , ┴|, ┬|, —|, ┴├, 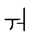 ) previously mapped to a corresponding heading direction of the conversion interaction and the certain character (e.g., " 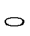 ").

For example, in FIG. 3, the user may convert a moving direction of a drawing interaction in a rightward direction to input " 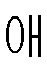 ", which a combination of a " 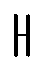 " mapped in a heading direction thereof and " 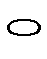 ", according to gesture input of a conversion interaction moving in a leftward direction in a direction opposite to the moving direction according to gesture input continuously inputted from the drawing interaction. Further, the user may convert a moving direction of a drawing interaction in a leftward direction to input " 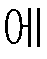 ", which is a combination of a "┤|" mapped in a heading direction thereof and " 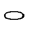 ", according to gesture input of a conversion interaction moving in a rightward direction being a direction opposite to the moving direction according to gesture input continuously inputted from the drawing interaction. Moreover, the user may convert a moving direction of a drawing interaction in an upward direction to input " 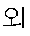 ", which is a combination of a "┴|" mapped in a heading direction thereof and " 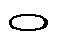 ", according to a gesture input for inputting a conversion interaction moving in a downward direction being a direction opposite to the moving direction according to gesture input continuously inputted from the drawing interaction. In addition, the user may convert a moving direction of a drawing interaction in a downward direction to input " 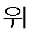 ", which is a combination of a "┬|" mapped in a heading direction thereof and " 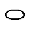 ", according to gesture input for inputting a conversion interaction moving in an upward direction being a direction opposite to the moving direction according to gesture input continuously inputted from the drawing interaction. The user may convert a moving direction of a drawing interaction in a left lower diagonal (right lower diagonal) direction to input " 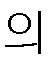 ", which is a combination of a "—|" mapped in a heading direction thereof and " 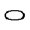 ", according to gesture input of a conversion interaction moving in a right upper diagonal (or left upper diagonal) direction being a direction opposite to the moving direction according to gesture input continuously input from the drawing interaction. The user may convert a moving direction of a drawing interaction in an upward direction to input " 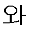 ", which is a combination of a "┴├" mapped in a heading direction thereof and " 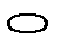 ", according to gesture input of a conversion interaction moving in a rightward direction vertical to the moving direction according to gesture input continuously input from the drawing interaction. The user may convert a moving direction of a drawing interaction in a downward direction to input " 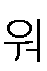 ", which is a combination of a " 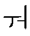 " mapped in a heading direction thereof and " 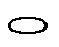 ", according to gesture input for inputting a conversion interaction moving in a left direction vertical to the moving direction according to gesture input continuously inputted from the drawing interaction.

That is, the user may input a drawing interaction as illustrated above and then input a conversion interaction achieved by changing a direction of the drawing interaction in a maintained state of corresponding input to extend and input the drawing interaction. For example, when the user inputs a conversion interaction that inputs a drawing interaction in a leftward direction on a character region and then changes a direction of the drawing interaction to an opposite direction (e.g., change of 180°), a ' 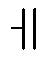 ' is input. When the user inputs a conversion interaction that inputs a drawing interaction in a rightward direction on the character region and then changes a direction of the drawing interaction to an opposite direction (e.g., change of 180°), a ' 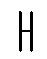 ' is input. When the user inputs a conversion interaction that inputs a drawing interaction in an upward direction on the character region and then changes a direction of the drawing interaction to an opposite direction (e.g., change of 180°), a "┴|" is input. When the user inputs a conversion interaction that inputs a drawing interaction in a downward direction on the character region and changes a direction of the drawing interaction to an opposite direction (e.g., change of 180°), a "┬|" is input. When the user inputs a conversion interaction that inputs a drawing interaction in a lower-right (or lower-left) diagonal direction on the character region and then changes a direction of the drawing interaction to an opposite direction (e.g., change of 180°), a "—|" is input. When the user inputs a conversion interaction that inputs a drawing interaction in an upward direction on the character region and then vertically changes (e.g., change of 90°) a direction of the drawing interaction, a "┴├" is input. When the user inputs a conversion interaction that inputs a drawing interaction in a downward direction on the character region and then vertically changes (e.g., change of 90°) a direction of the drawing interaction, a " 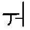 " is input.

According to an embodiment of the present invention, a vowel group of a character is identified with respect to a corresponding direction according to whether a location of a point "•" of a vowel is in any direction in vowel "|" or "—", and combine the identified character with "|" according to a conversion interaction which is converted in a conversion point and is moved in an origin direction (e.g., a direction towards a point on which the touch interaction is originally touched). As described above, a certain complete character is generated by combining a character mapped according to a conversion interaction with a character according to a touch interaction in a scheme corresponding to an input scheme of a corresponding language system to improve a character input leaning effect of the user. For example, a "|" becomes a "├", in which a location of "•" indicates in a right side of a "|" according to a drawing interaction directed towards the right. The "├" is combined with the "|" to input " 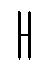 " according to a conversion interaction in which the drawing interaction is converted in a start direction of the drawing interaction (i.e., a direction towards the start of the drawing interaction) in a conversion point. Further, a "|" becomes a "┤" in which a location of "•" indicates in a left side of a "|" according to a drawing interaction of a leftward direction. The "┤" is combined with the "|" to input "┤|" according to a conversion interaction in which the drawing interaction is converted in a start direction of the drawing interaction in a conversion point. Moreover, a "—" becomes a "┴" in which a location of "•" indicates in an upper side of a "—" according to a drawing interaction of an upward direction. The "┴" is combined with the "|" to input "┴|" according to a conversion interaction in which the drawing interaction is converted in a start direction of the drawing interaction in a conversion point. Moreover, a "—" becomes a "┬" in which a location of "•" indicates in a lower side of a "—" according to a drawing interaction in an downward direction. The "|" is combined with the "┬" to input "┬|" according to a conversion interaction in which the drawing interaction is converted and moved in a start direction of the drawing interaction in a conversion point.

Furthermore, a "—" is inputted according to a drawing interaction in a left lower diagonal (or right lower diagonal) direction, and a "|" is combined with the "—" to input a "—|" according to a conversion interaction in which the drawing interaction is changed and moved to a start direction in the conversion point. Moreover, a "—" becomes a "┴", in which a location of "•" indicates in an upper side of a "—" according to a drawing interaction in an upward direction. The "├" is combined with the "┴" to input "┴├" according to a conversion interaction in which the drawing interaction is converted and moved in a rightward direction of the drawing interaction in a conversion point. The "┴├" may also be input through another scheme. Further, a "—" becomes a "┬" in which a location of "•" indicates in a lower side of a "—" according to a drawing interaction of a downward direction. The "┤" is combined with the "┬" to input " 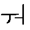 " according to a conversion interaction in which the drawing interaction is converted and moved in a leftward direction of the drawing interaction in a conversion point. The " 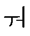 " may also be input through another scheme.

Next, the user may input a second conversion interaction (e.g., a move interaction, a drag interaction, a flick interaction, etc.) switching to a direction (e.g., an opposite direction, a vertical direction, a diagonal direction, etc.) other than a heading direction of the first conversion interaction (namely, changed to a moving direction of the first conversion interaction) and input a movement to a corresponding direction in a state that the conversion interaction (e.g., move interaction, drag interaction, etc.) in the drawing interaction of the second interaction is input. Accordingly, the user may input a character that is a combination of a corresponding character (e.g., a vowel group of Hanguel including "⊨", " 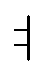 ", " 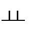 ", " 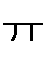 ", " 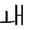 ", " 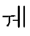 ") previously mapped to a corresponding heading direction of the second conversion interaction and the certain character (e.g., " 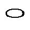 ").

For example, in FIG. 3, the user may convert a moving direction of a first conversion interaction in a left direction to input " 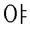 ", which is a combination of a " 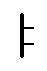 " mapped in a heading direction thereof and " 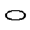 " according to gesture input for inputting a second conversion interaction moving in a rightward direction being a direction opposite to the moving direction according to gesture input continuously inputted from the drawing interaction. Further, the user may convert a moving direction of a first drawing interaction in a rightward direction to input " 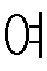 ", which is a combination of a " 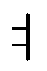 " mapped in a heading direction thereof and " 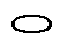 " according to gesture input of a second conversion interaction moving in a leftward direction being a direction opposite to the moving direction according to gesture input continuously inputted from the drawing interaction. Moreover, the user may convert a moving direction of a first conversion interaction in a downward direction to input " 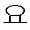 ", which is a combination of a " 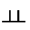 " mapped in a heading direction thereof and " 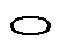 " according to gesture input of a second conversion interaction moving in an upward direction being a direction opposite to the moving direction according to gesture input continuously input from the first conversion interaction. In addition, the user may convert a moving direction of a first conversion interaction in an upward direction to input " 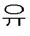 ", which is a combination of a " 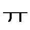 " mapped in a heading direction thereof and " 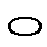 " according to gesture input of a second conversion interaction moving in a downward direction being a direction opposite to the moving direction according to gesture input continuously inputted from the first conversion interaction. The user may convert a moving direction of a first conversion interaction in a vertical rightward direction of the drawing interaction to input " 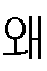 ", which is a combination of a " 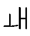 " mapped in a heading direction thereof and " 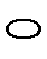 " according to gesture input of a second conversion interaction moving in a leftward direction being a direction opposite to the moving direction according to gesture input continuously inputted from the first conversion interaction. The user may convert a moving direction of a first conversion in a vertical leftward direction of the drawing interaction to input " 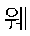 ", which is a combination of " 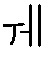 " mapped in a heading direction thereof and " 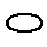 " according to gesture input of a second conversion interaction moving in a rightward direction vertical to the moving direction according to gesture input continuously inputted from the drawing interaction. The user may convert a moving direction of a drawing interaction in a downward direction to input " 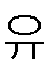 ", which is a combination of " 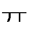 " mapped in a heading direction thereof and " 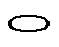 " according to gesture input of a second conversion interaction moving in a direction opposite to the moving direction according to gesture input continuously input from the first conversion interaction.

As described above, the user may continuously input the drawing interaction and a first conversion interaction, and then continuously input a second conversion interaction achieved by changing a direction thereof to extend and input the drawing interaction and the first conversion interaction. For example, the user may input a first conversion interaction achieved by inputting a drawing interaction in a rightward direction on a character region and then changing a direction of the drawing interaction in an opposite direction (e.g., change of 180°). After changing the direction, when the user inputs a second conversion interaction again by changing and moving the first conversion interaction in an opposite direction (e.g., a change of 180°), a " 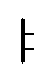 " is input.

In another example, the user inputs a first conversion interaction achieved by inputting a drawing interaction in a left direction on the character region and then changing the direction of the drawing interaction in an opposite direction (e.g., change of 180°). After changing the direction, when the user inputs a second conversion interaction again by changing and moving the first conversion interaction in an opposite direction (e.g., change of 180°), a " 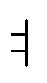 " is input.

In another example, the user inputs a first conversion interaction achieved by inputting a drawing interaction in an upward direction on the character region and then changing the direction of the drawing interaction in an opposite direction (e.g., a change of 180°). After changing the direction, when the user inputs a second conversion interaction again by changing and moving the first conversion interaction in an opposite direction (e.g., change of 180°), a " 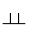 " is input.

In another example, the user inputs a first conversion interaction achieved by inputting a drawing interaction in a downward direction on the character region and then changing the direction of the drawing interaction in an opposite direction (e.g., a change of 180°). After changing the direction, when the user inputs a second conversion interaction again by changing and moving the first conversion interaction in an opposite direction (e.g., change of 180°), a " 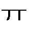 " is input. The user inputs a first conversion interaction achieved by inputting a drawing interaction in an upward direction on the character region and then changing the direction of the drawing interaction in a vertical direction (e.g., a change of 90°). After changing the direction, when the user inputs a second conversion interaction again changing and moving the first conversion interaction in an opposite direction (e.g., change of 180°), a " 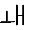 " is input.

In another example, the user inputs a first conversion interaction achieved by inputting a drawing interaction in a downward direction on the character region and then changing the direction of the drawing interaction in a vertical direction (e.g., change of 90°). After changing the direction, when the user inputs a second conversion interaction again changing and moving the first conversion interaction in an opposite direction (e.g., change of 180°), a " 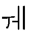 " is input.

Next, the user may input a second conversion interaction (e.g., a move interaction, a drag interaction, a flick interaction, etc.) switching to a direction (e.g., opposite direction, vertical direction, diagonal direction, etc.) other than a heading direction of the first conversion interaction (namely, changing to a moving direction of the first conversion interaction) and moving to a corresponding direction in a state that the first conversion interaction (e.g., a move interaction, a drag interaction, etc.) in the drawing interaction of the second interaction is input. After changing the direction, the user may input a conversion interaction (namely, a third conversion interaction, for example, a move interaction, a drag interaction, or a flick interaction) of a second conversion interaction (e.g., a move interaction, a drag a interaction, a flick interaction, etc.) and change to a direction (e.g., opposite direction, vertical direction, diagonal direction, etc.) other than a heading direction of the second conversion interaction and move to a corresponding direction (namely, change of a moving direction of the second conversion interaction). Accordingly, the user inputs a character that is a combination of a corresponding character (e.g., a certain vowel group, 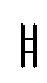 , 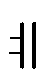 ) previously mapped in a corresponding heading direction of the third conversion interaction and the certain character (e.g., " 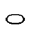 "). For example, as shown in FIG. 3, the user may convert a moving direction of a second interaction in a rightward direction to input " 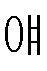 ", which is a combination of a " H " mapped in a heading direction thereof and " 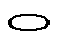 ", according to gesture input of a third conversion interaction moving in a left direction opposite to the moving direction according to one gesture input continuously input from the second conversion interaction. Moreover, the user may convert a moving direction of a second interaction in a left direction to input " 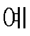 ", which is a combination of a " 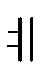 " mapped in a heading direction thereof and " 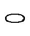 ", according to gesture input of the third conversion interaction moving in a rightward direction opposite to the moving direction according to one gesture input continuously input from the second conversion interaction.

As described above, the user may continuously input the drawing interaction, the first conversion interaction, and the second conversion interaction as described above, and continuously input a third conversion interaction achieved by changing directions thereof to extend and input the drawing interaction, the first conversion interaction, and the second conversion interaction. For example, the user inputs a first conversion interaction achieved by inputting a drawing interaction in a rightward direction on a character region and then changing a direction of the drawing interaction in an opposite direction (e.g., change of 180°). After changing the direction, when the user continuously inputs a third conversion interaction achieved by again changing and moving a direction of the second conversion interaction (e.g., change of 180°) in a state that a second conversion interaction achieved by again changing the first conversion interaction in an opposite direction (e.g., change of 180°) is input, a " 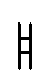 " is input.

In another example, the user inputs a first conversion interaction achieved by inputting a drawing interaction in a leftward direction on a character region and then changing a direction of the drawing interaction in an opposite direction (e.g., change of 180°). After changing the direction, when the user continuously inputs a third conversion interaction achieved by again changing and moving a direction of the second conversion interaction (e.g., change of 180°) in a state that a second conversion interaction achieved by again changing the first conversion interaction in an opposite direction (e.g., change of 180°) is input, a " 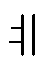 " is input.

As described above, according to an embodiment of the present invention, the user may identify a character type of a second character group to input characters of various systems in an input scheme including a user gesture with respect to a second character group that is not indicated on a touch key pad in a state that only a first character group is arranged in the touch device. Therefore, various characters may be input by one user gesture input according to an interaction that changes a progression of an input user gesture at a certain point (e.g., a conversion point). For example, when the user inputs a drawing interaction in a rightward direction on a character region to which a "¬" is mapped, a character " 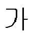 " may be input. When the user converts the drawing interaction to continuously input the first conversion interaction in an input state of the character " 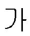 ", a character " 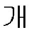 " may be input. When the user converts the first convention interaction to continuously input the second conversion interaction in an input state of the " 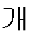 " character, a character " 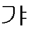 " may be input. When the user converts the second conversion interaction to continuously input a third conversion interaction in an input state of the character " 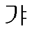 ", a character " 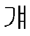 " may be input. As described above, the present invention may rapidly and easily input various characters in a continuous interaction input scheme in which an interaction is converted in a certain conversion point based on one user gesture.

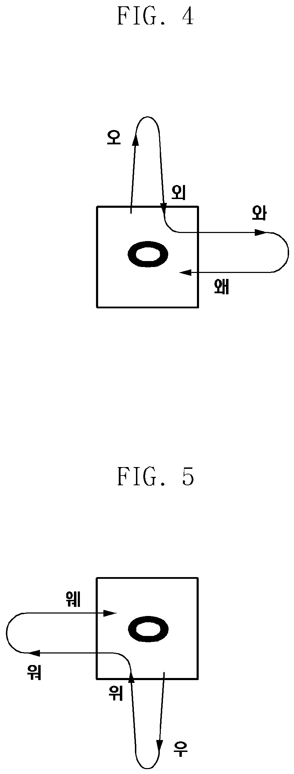

FIGs. 4 and 5 are diagrams illustrating an example of a character input scheme in a touch device according to an embodiment of the present invention. In particular, FIGS. 4 and 5 illustrate an example where a character according to a touch interaction and a mapping character according to each conversion interaction are input in an input scheme based on a Hanguel language system.

Referring to FIGs. 4 and 5, FIG. 4 illustrates an embodiment where " 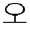 ", " 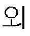 ", " 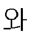 ", and " 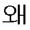 " are input according to user gesture input in a Hanguel input scheme. FIG. 5 illustrates an embodiment when " 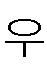 ", " 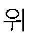 ", " 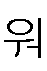 ", and " 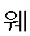 " are input according to user gesture input in a Hanguel input scheme.

As shown in FIG. 4, a user inputs a touch interaction on a character region to which a " 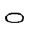 " character is allocated. In this case, the touch device selects the character " 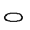 " of the character region to wait for next user input in response to the touch interaction. Next, the user inputs a drawing interaction moving the touch interaction in an upward direction. Then, the touch device combines a "┴" according to the drawing interaction with the selected character " 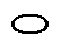 " in response to the drawing interaction to generate a " 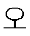 " and indicates the generated " 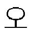 " on at one set region of a display region 110 or a touch input region 150 in the form of a preview.

Next, the user changes a heading direction of the drawing interaction to input a first conversion interaction moving in a downward direction (an origin direction in which a drawing interaction for addition of "|" starts) in order to input a character " 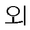 " achieved by adding "|" to the character " 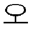 ". Then, the touch device combines a "┴|" according to the first conversion interaction with the selected character " 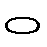 " in response to the first conversion interaction to generate a " 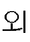 ", substitutes the generated " 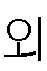 " for a " 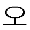 " indicated on the one region 150, and indicates the substituted " 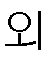 " in the form of a preview.

Next, the user inputs a second conversion interaction achieved by changing a heading direction of the first conversion interaction to input a character " 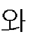 " where a "•" is added to the character " 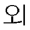 " and moving the first conversion interaction in a rightward direction (for addition of the "•" in a rightward direction of a "|"). Then, the touch device combines a "┴├" according to the second conversion interaction with the selected character " 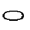 " to generate a character " 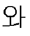 " in response to the second conversion interaction, substitutes the generated character " 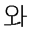 " for a " 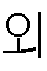 " indicated on the one region, and indicates the substituted character " 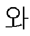 " in the form of a preview.

Next, the user inputs a third conversion interaction achieved by changing a heading direction of the second conversion interaction to input a character " 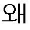 " where a "|" is added to the character " 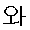 " and moving the second conversion interaction in a leftward direction (an origin direction in which a second conversion interaction of addition of a "|" starts). Then, the touch device combines a " 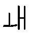 " according to the third conversion interaction with the selected character " 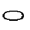 " to generate a character " 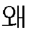 " in response to the third conversion interaction, substitutes the generated character " 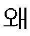 " for a " 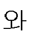 " indicated on the one region, and indicates the character " 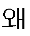 " in the form of a preview.

Meanwhile, when the foregoing drawing interaction and each conversion interaction are input, and when a desired character of the user is indicated in the form of a preview, the user may release a corresponding interaction input in a corresponding time point to input and indicate a corresponding character on a display region 110 indicated in the form of a preview.

Referring to another example according to FIG. 5, a user inputs a touch interaction in a character region to which a character " 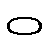 " is allocated. In this case, the touch device selects a character " 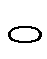 " of the character region in response to the touch interaction to wait for next user input. Next, the user inputs a drawing interaction moving the touch interaction in a downward direction. Then, the touch device combines a "┬" according to the drawing interaction with the selected character " 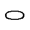 " to generate a " 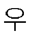 " in response to the drawing interaction, and indicates the generated " 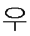 " on one set region of the display region 110 or the touch input region 150 in the form of a preview. Next, the user inputs a first conversion interaction achieved by changing a heading direction of the drawing interaction to input a character " 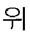 " where a "|" is added to the character " 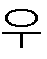 " and moving the drawing interaction in an upward direction (an origin direction in which a drawing interaction of addition of a "|" starts). Then, the touch device combines a "┬|" according to the first conversion interaction with the selected character " 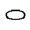 " to generate a character " 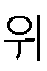 " in response to the first conversion interaction, substitute the generated character " 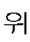 " for a "" indicated on the one region, and indicates the character "" in the form of a preview.

Next, the user inputs a second conversion interaction achieved by changing a heading direction of the first conversion interaction to input a character " 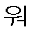 " to which a "•" is added to the character "" and moving the first conversion interaction in a left direction (for addition of the "•" in a left direction of a "|"). Then, the touch device combines a " 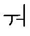 " according to the second conversion interaction with the selected character " 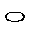 " to generate a character " 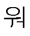 " in response to the second conversion interaction, substitutes the generated character " 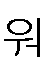 " for a " 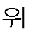 " indicated on the one region, and indicates the substituted character " 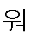 " in the form of a preview.

Next, the user may inputs a third conversion interaction achieved by changing a heading direction of the second conversion interaction to input a character " 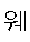 " where a "|" is added to the character " 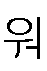 " and moving the second conversion interaction in a right direction (an origin direction in which a second conversion interaction of addition of a "|" starts). Then, the touch device combines a " 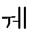 " according to the third conversion interaction with the selected character " 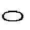 " to generate a character " 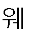 " in response to the third conversion interaction, substitutes the generated character " 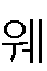 " for a " 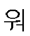 " indicated on the one region, and indicates the character " 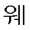 " in the form of a preview.

Meanwhile, when the foregoing drawing interaction and each conversion interaction are input, and when a desired character of the user is indicated in the form of a preview, the user may release a corresponding interaction input in a corresponding time point to input and indicate a corresponding character on a display region 110 indicated in the form of a preview.

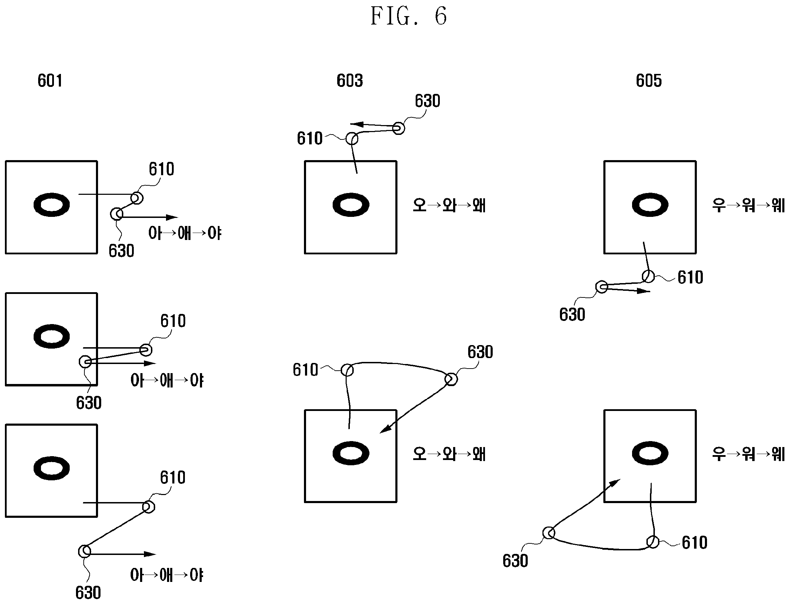

FIG. 6 is a diagram illustrating an example for describing a character input operation using gesture input in a touch device according to an embodiment of the present invention.

Referring to FIG. 6, according to an embodiment of the present invention, a user gesture may be achieved by starting a first interaction (e.g., a touch interaction selecting a certain character among a first consonant group on a touch keypad) at a certain point and moving the touch interaction in a predetermined direction from the certain point. The second interaction may include a conversion interaction converting and moving the drawing interaction to a certain other direction (e.g., an opposite direction, a diagonal direction, a vertical direction) in a heading direction of the drawing interaction. Further, the conversion interaction may correspond to an extension line of the drawing interaction, and may be classified into a plurality of conversion interactions according to a conversion point in which a heading direction thereof is converted.

More specifically, the first user gesture that starts from the first interaction, and the second interaction are continuously performed. In this case, as shown in FIG. 6, the second interaction may be a conversion interaction classified according to conversion points 610 and 630 in which an interrupt for changing a heading direction is generated. Accordingly, a previously performed conversion interaction and a next performed conversion interaction are continuously input in a free form in which a conversion point is generated. That is, the user gesture of the present invention may be input in some form capable of generating a conversion interrupt such as the conversion point regardless of a certain angle or a certain direction. Accordingly, in the foregoing embodiment, although a certain numeric expression such as 180° or 90° is used to help understanding of the description, the present invention is not limited to these angles/directions. Accordingly, embodiments of the present invention may be freely realized in some input from having a direction change to configure a conversion point. For instance, as shown in FIG. 6, embodiments of the present invention may have left and right, up and down reciprocation moving form, a zigzag form, a stepped form, a certain figure form.

As illustrated above, embodiments of the present invention may allow input of various characters by continuously inputting user gestures according to a conversion interrupt based on a conversion point.

Reference numeral 601 of FIG. 6 indicates an example of various user gestures for inputting " 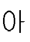 -> 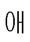 -> 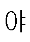 ". For example, when a drawing interaction is released after inputting the drawing interaction in a rightward direction (e.g., a rightward direction or a rightward direction having a predetermined angle) in a character region of the character " 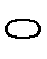 ", a " 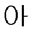 " may be generated and displayed on the display region 110. When a first conversion interaction changing the drawing interaction to a certain direction (e.g., a lower-left diagonal direction, an upward direction or a lower-right diagonal direction) in the conversion point 610 in a maintained state of the drawing interaction and moving the changed drawing interaction is released after input thereof, a " 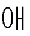 " is generated and displayed on the display region 110. When a second conversion interaction changing and moving the first conversion interaction in a certain direction (e.g., a rightward direction or a rightward direction having a predetermined angle) in a conversion point 630 in a maintained state of the first conversion interaction after continuous input thereof, a " 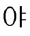 " is generated and displayed on the display region 110.

Reference numeral 603 of FIG. 6 indicates an example of various user gestures for inputting " 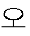 -> 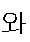 -> 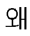 ". For example, when a drawing interaction is released after inputting the drawing interaction in an upward direction in a character region of the character " 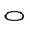 ", a " 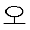 " is generated and displayed on the display region 110. When a first conversion interaction changing and moving the drawing interaction in a certain direction (e.g., a rightward direction or a rightward direction having a predetermined angle) is release in a conversion point 610 in a maintained state of the drawing interaction after continuous input thereof, a character " 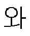 " is generated and displayed on the display region 110. When a second conversion interaction changing and moving the first conversion interaction in a certain direction (e.g., a leftward direction or a leftward direction having a predetermined angle) is release in a conversion point 630 in a maintained state of the first conversion interaction after continuous input thereof, a character " 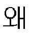 " is generated and displayed on the display region 110.

Further, when a drawing interaction is released after inputting the drawing interaction in an upward direction in a character region of the character " 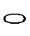 ", a " 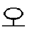 " is generated and displayed on the display region 110. When a first conversion interaction changing and moving the drawing interaction in a certain direction (e.g., a rightward direction or a rightward direction having a predetermined angle) is release in a conversion point 610 in a maintained state of the drawing interaction after continuous input thereof, a " 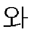 " is generated and displayed on the display region 110. When a second conversion interaction changing and moving the first conversion interaction in a certain direction (e.g., a lower-left diagonal direction, a downward direction, or a lower-right diagonal direction) is release in a conversion point 630 in a maintained state of the first conversion interaction after continuous input thereof, a " 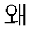 " is generated and displayed on the display region 110.

Reference numeral 605 of FIG. 6 indicates an example of various user gestures for inputting " 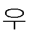 -> -> 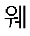 ". For example, when a drawing interaction is released after inputting the drawing interaction in a downward direction in a character region of the character " 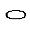 ", a " 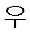 " is generated and displayed on the display region 110. When a first conversion interaction changing and moving the drawing interaction in a certain direction (e.g., a leftward direction or a leftward direction having a predetermined angle) is release in a conversion point 610 in a maintained state of the drawing interaction after continuous input thereof, a " 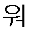 " is generated and displayed on the display region 110. When a second conversion interaction changing and moving the first conversion interaction in a certain direction (e.g., a rightward direction or a rightward direction having a predetermined angle) is release in a conversion point 630 in a maintained state of the first conversion interaction after continuous input thereof, a " 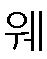 " is generated and displayed on the display region 110.

Further, when a drawing interaction is released after inputting the drawing interaction in an downward direction in a character region of the character " 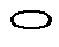 ", a " 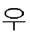 " is generated and displayed on the display region 110. When a first conversion interaction changing and moving the drawing interaction in a certain direction (e.g., a leftward direction or a leftward direction having a predetermined angle) is release in a conversion point 610 in a maintained state of the drawing interaction after continuous input thereof, a " 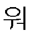 " may be generated and displayed on the display region 110. When a second conversion interaction changing and moving the first conversion interaction in a certain direction (e.g., right upper diagonal direction, upward direction, or left upper diagonal direction) is release in a conversion point 630 in a maintained state of the first conversion interaction after continuous input thereof, a " 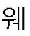 " is generated and displayed on the display region 110.

The above-described embodiment of the present invention allows a user to rapidly and easily input various characters in continuously converted interaction input scheme in a certain conversion point based on a user gesture. The input scheme of the user gesture may be achieved in any form for input convenience of the user regardless of a certain form. This may be input based on generation of a conversion interrupt by a conversion point according to a language system used by the user.

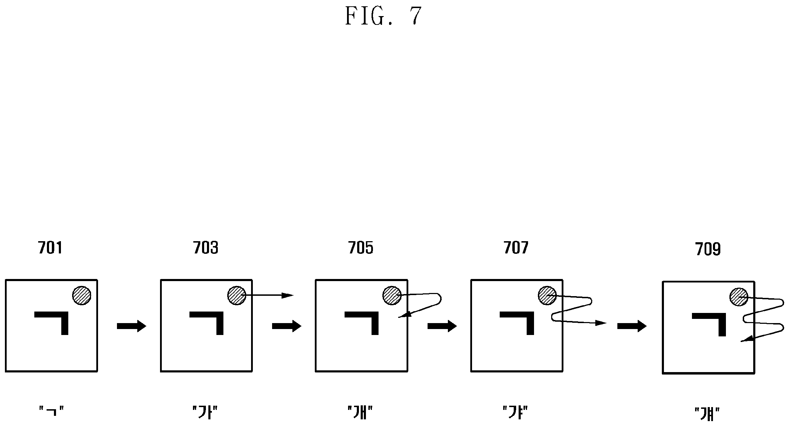

FIG. 7 is a diagram illustrating a character input operation in a touch device according to an embodiment of the present invention.

Referring to FIG. 7, FIG. 7 illustrates a case where characters "¬", " 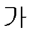 ", " 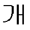 ", " 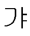 ", " 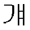 " of Hanguel are input as a touch interaction, a drawing interaction, a first conversion interaction, a second conversion interaction, and a third conversion are sequentially input in a character region to which a certain character (e.g., consonant '¬' of Hanguel).

First, as illustrated in reference numeral 701, the user inputs a touch interaction touching a character region on a touch keypad of a touch input region to which a character "¬" is allocated. Accordingly, the character "¬" is indicated in the form of a preview on one of a display region 110 or a touch input region 150 corresponding to the touch interaction. When the user releases the touch interaction, character input is completed and the character "¬" is determined as a complete character and is input and displayed on the display region 110.

The user may input a drawing interaction moving drawing to a rightward direction as illustrated in reference numeral 703 in a state where a touch input in reference numeral 701 is maintained. Accordingly, the character "¬", which is a combination of a vowel "├" mapped to a rightward direction of drawing with the character "¬ ", is substituted and indicated in the form of a preview for a character "¬ ". When the user releases the drawing interaction on the touch keypad, character input is completed and a character " 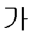 " is determined as a complete character and is input and displayed on the display region 110.

Further, the user may input a first conversion interaction changing and moving a drawing direction as illustrated in reference numeral 705 in a state where the drawing movement input in reference numeral 703 is maintained. Then, a character " 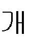 ", which is a combination of a vowel " 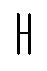 " mapped to the change with the character "¬", is substituted for the character " 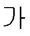 " and is indicated in the form of a preview corresponding to the first conversion interaction. In this case, the user releases the first conversion interaction on the touch key pad, character input is terminated and a character " 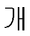 " is determined as a complete character and may be displayed on the display region 110.

Further, the user may input a second conversion interaction changing and moving a drawing direction as shown in reference numeral 707 in a state where the first conversion interaction input in reference numeral 705 is maintained. Then, a character " 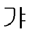 ", which is a combination of a vowel " 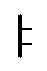 " mapped to the change with the character "¬", is substituted for the character " 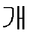 " and is indicated in the form of a preview corresponding to the second conversion interaction. In this case, the user releases the second conversion interaction on the touch key pad, character input is terminated and a character " 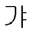 " is determined as a complete character and is displayed on the display region 110.

Further, the user may input a third conversion interaction changing and moving a drawing direction as shown in reference numeral 709 in a state that the first conversion interaction input in reference numeral 707 is maintained. Then, a character " 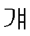 ", which is a combination of a vowel " 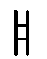 " mapped to change of drawing with the character "¬", is substituted for the character " 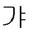 of the one region and is indicated in the form of a preview corresponding to the third conversion interaction.

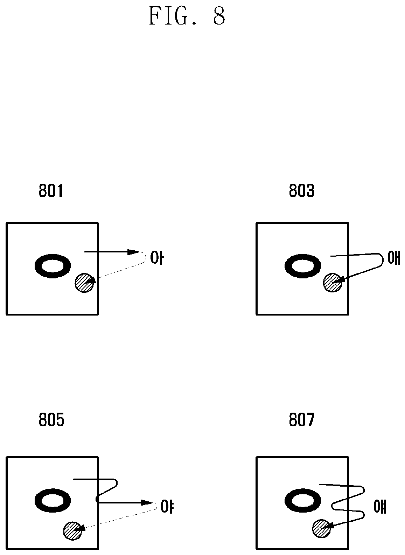

FIG. 8 is a diagram illustrating an example of an operation of initializing character input in progress during an character input operation in a touch device according to an embodiment of the present invention.

As shown in FIG. 8, FIG. 8 illustrates an example of an operation that initializes input to prepare new input while the user inputs " 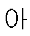 ", " 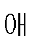 ", " 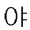 ", and " 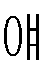 " according to a user gesture input based on a character region to which a character " 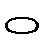 " is allocated.

Reference numeral 801 of FIG. 8 indicates an example of a case where the user initializes input of the character " 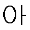 " and cancels based on a user gesture moving in a rightward direction. As illustrated in reference numeral 801, the user may move a user gesture moved to a certain point on the character region to initialize character input by waiting for a predetermined time. In this case, a corresponding character (e.g., character " 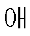 ") according to movement of a user gesture to a character region may be indicated on one of the display region 110 or the touch input region 150 in the form of a preview. When there is no change for more than a predetermined time after the user gesture is moved to a character region in the course of inputting the user gesture, the touch device may it as character input initialization. Accordingly, when determining the character input initialization, the touch device initializes a character " 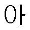 " (or " 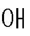 ") indicated in the form of a preview according to the user gesture, remove a preview of the character " 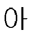 " (or " 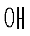 "), and wait for next input. In this case, when removing the preview according to the initialization, the touch device initializes only a character with respect to a second character group generated according to an input scheme of a user gesture, and maintains selection with respect to a character " 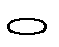 " of a firstly selected character region to provide a preview thereof. Although not shown, when a conversion interrupt is generated according to movement of the user gesture to the character region, a corresponding new character (e.g., " 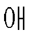 ") may be provided in the form of a preview. In this state, a user gesture moved to the character region is maintained in a fixed state for a predetermined time, initialization is determined such that a preview of a corresponding character " 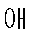 " of a preview finally indicated may be removed from one region. When a user gesture input (for example, a touch according to a user gesture input on the character region) is released in the initialized state, the character input may be cancelled.

Reference numeral 803 of FIG. 8 illustrates an example where a user cancels input of the character " 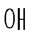 " to initialize in a state that a " 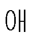 " is generated based on a user gesture generating one conversion interrupt. As illustrated in reference numeral 803, the user may move a user gesture moved to a certain point on the character region to initialize character input by waiting for the user gesture moved to the character region for a predetermined time. In this case, a corresponding character according to a user gesture may be indicated in the form of a preview. When there is no change for more than a predetermined time after the user gesture is moved to a character region in the course of inputting the user gesture, the touch device may interprets the lack of movement as character input initialization. Accordingly, when the determining the character input initialization, the touch device initializes a character " 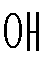 " indicated in the form of a preview according to the user gesture, removes a preview of the character " 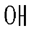 ", and waits for next input. In this case, when removing the preview according to the initialization, the touch device initializes only a character with respect to a second character group generated according to an input scheme of a user gesture, and maintains the selection with respect to a character " 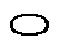 " of a firstly selected character region to provide a preview thereof. When a user gesture input is released (for example, a touch according to a user gesture input on the character region is released) in the initialized state, the character input is cancelled.

Reference numeral 805 of FIG. 8 illustrates an example where a user cancels input of the character " 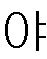 " to initialize in a state that a " 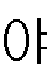 " is generated based on a user gesture generating two conversion interrupts. As illustrated in reference numeral 805, the user moves a user gesture moved to a certain point on the character region to initialize character input by waiting for the user gesture moved to the character region for a predetermined time. In this case, a corresponding character (e.g., character " 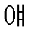 ") according to movement of a user gesture to a character region is indicated in the form of a preview. When there is no change for more than a predetermined time after the user gesture is moved to a character region in the course of inputting the user gesture, the touch device may determine it as character input initialization.

Accordingly, when the determining the character input initialization, the touch device initializes a character " 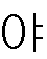 " indicated in the form of a preview according to the user gesture, removes a preview of the character " 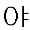 " (or " 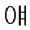 "), and waits for a next input. In this case, when removing the preview according to the initialization, the touch device initializes only a character with respect to a second character group generated according to an input scheme of a user gesture, and maintains selection with respect to a character " 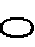 " of a firstly selected character region to provide a preview thereof. Although not shown, when a conversion interrupt is generated according to movement of the user gesture to the character region, a corresponding new character (e.g., " 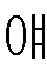 ") is provided in the form of a preview. In this state, when the user gesture moved to the character area maintains a fixed state for a predetermined time, initialization is determined and a preview of a corresponding character " 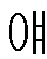 " of a finally indicated preview, a preview of a corresponding character " 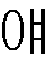 " finally indicated are removed from display. When a user gesture input is released (for example, a touch according to a user gesture input on the character region is released) in the initialized state, the character input is cancelled.

Reference numeral 807 of FIG. 8 illustrates an example where a user cancels input of the character " 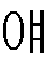 " to initialize in a state that a " 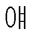 " is generated based on a user gesture generating three conversion interrupts. As illustrated in reference numeral 807, the user moves a user gesture moved to a certain point on the character region to initialize character input by waiting for the user gesture moved to the character region for a predetermined time according to three conversion interactions. In this case, a corresponding character according to a user gesture is indicated in the form of a preview on one region. When there is no change for more than a predetermined time after the user gesture is moved to a character region in the course of inputting the user gesture, the touch device interprets the lack of change as character input initialization.

Accordingly, when character input initialization is determined, the touch device initializes a character " 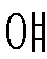 " indicated in the form of a preview according to the user gesture to remove a preview and wait for a next input. In this case, when removing the preview according to the initialization, the touch device initializes only a character with respect to a second character group generated according to an input scheme of a user gesture, and maintains selection with respect to a character " 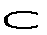 " of a firstly selected character region to provide a preview thereof. When a user gesture input (for example, a touch according to a user gesture input on the character region) is released in the initialized state, the character input is cancelled.

As described above, according to an embodiment of the present invention, the user may initialize a character input operation by returning a character region to which a touch interaction is firstly input after the user gesture is released while inputting a character using a user gesture to wait for a predetermined time. Accordingly, character input initialization according to embodiments of the present invention may be performed initially moving a user gesture in progress to a character region to which a touch interaction is input regardless of the location of the user gesture, and maintain the user gesture in a fixed state for a predetermined time to generate initialization.

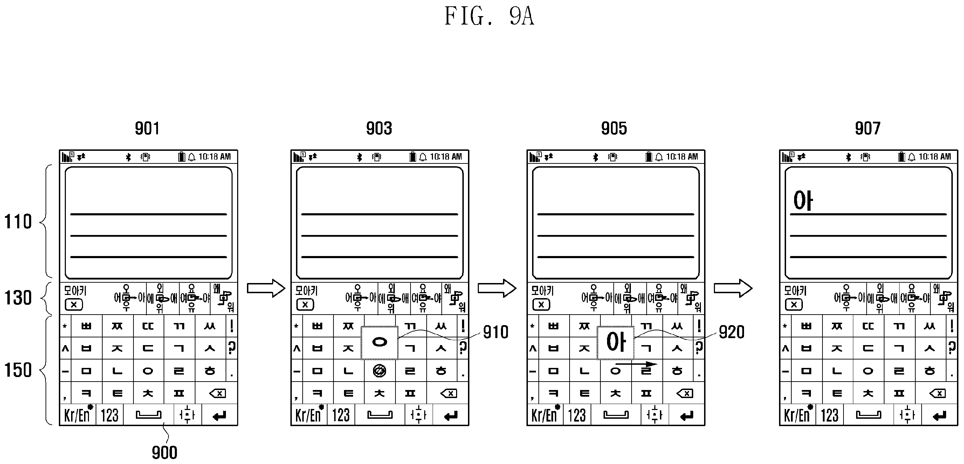

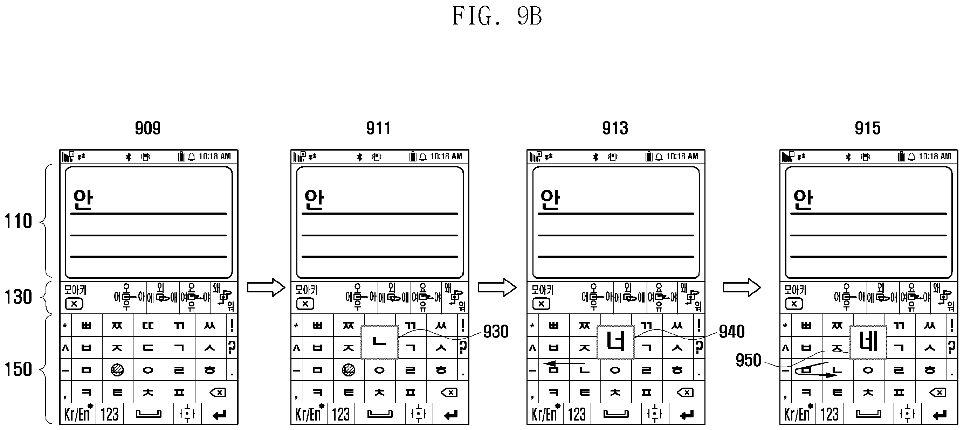

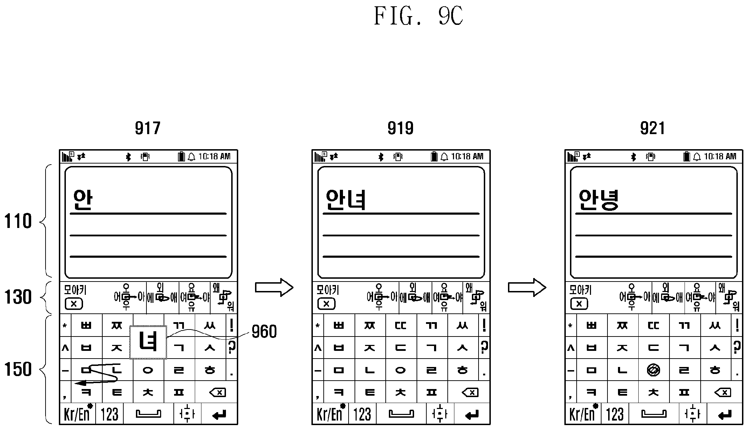

FIGs. 9A to 9C are diagrams illustrating examples of a screen for describing a character input operation in a touch device according to an embodiment of the present invention.

Referring to FIGs. 9A to 9C, these figures illustrate an example of a screen for inputting a character " 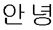 " according to user gesture input. First, as illustrated in reference numeral 901, an execution screen according to execution of a character input mode of the user is displayed. As described above, the execution screen may be classified into a display region 110 and a touch input region 150. FIGs. 9A to 9C also show a selectively provided guide region 130. Although not described and shown in FIGS. 9A to 9C, when various character input schemes are supported in the touch device, the user may toggle a desired character input scheme using a given toggle button (e.g., space button) 900.

Next, as described above, where a character input mode is executed to indicate an execution screen thereof, the user may input a touch interaction on a character region to which a character " 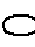 " is allocated, as illustrated at reference numeral 903, for inputting a character " 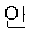 " from a character " 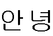 ". Then, the touch device indicates a character " 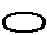 " selected according to the touch interaction on one region of the touch input region 150 in the form of a preview in response to the touch interaction.

Next, the user inputs a drawing interaction moving the touch interaction in a rightward direction, as illustrated at reference numeral 905, for generating a character " 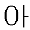 " based on a previously input character " 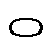 ". Then, the touch device combines the previously input character " 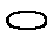 " with a character "├" according to a next input drawing interaction to generate a character " 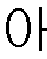 ", and indicates the generated " 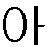 " on one region of the touch input region 150 in the form of a preview 920. The preview 920 of a new generated " 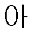 " is substituted and displayed for a preview 910 of the previously input character " 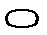 ".

Next, the user releases a user gesture (particularly, a finally input drawing interaction) input to the touch input region 150 as illustrated at reference numeral 907 for terminating input of the previously generated character " 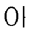 ". Then, the touch device determines that termination of character input has occurred in response to the release of the drawing interaction and input and indicate a character " 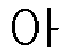 " indicated in the form of the preview 920 to the display region 110. Next, the user inputs and releases a touch interaction to and from a character region to which a " 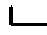 " is allocated, as illustrated at reference numeral 909, for completing a character " 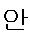 " based on the input character " 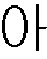 ". That is, the user taps a character region of a character " 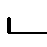 ". Then, the touch device combines a character " 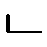 " of a corresponding character region with a character " 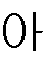 " in response to input and release of the touch interaction to generate a complete character " 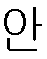 ", and input and indicates the generated " 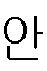 " to the display region 110. In this case, the character " 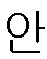 " is substituted and indicated from a previous input displayed character " 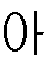 ".

Next, the user initially inputs a touch interaction to a character region to which a character " 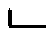 ", as illustrated at reference numeral 911, for inputting a character " 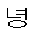 " from a character " 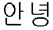 ". Then, the touch device indicates the character " 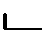 " selected according to the touch interaction on one region of a touch input region 150 in the form of a preview 930 in response to the touch interaction.

Next, the user continuously inputs a user gesture (e.g., a drawing interaction and a conversion interaction conversion-moving the drawing interaction based on a conversion point) moving the touch interaction corresponding to a zig-zag pattern such as left-right-left, as illustrated at reference numeral 913 to reference numeral 917. Then, the touch device combines characters "┤", "┤|", and " 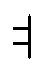 " according to change of a next input user gesture with a previously input character " 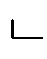 " to generate characters " 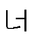 ", " 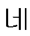 ", and " 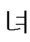 ", and sequentially indicates the generated characters " 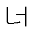 ", " 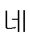 ", and " 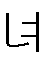 " on one region of a touch input region 150. For example, as illustrated at reference numeral 913, a character " 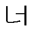 ", which is a combination of a character " 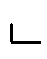 " and a character "┤", is displayed in the form of a preview 940 according to a drawing interaction in a leftward direction. Next, the drawing interaction is converted in a conversion point so that a character " 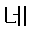 ", which is a combination of a character " 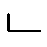 " and a character "┤|", according to a first conversion interaction moving in a rightward direction in the form of a preview 950. Finally, the first conversion interaction is converted in a conversion point so that a character " 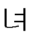 ", which is a combination of a character " 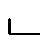 " and a character " 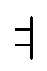 ", according to a second conversion interaction moving in a leftward direction. Previews 940, 950, and 960 corresponding to the characters " 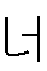 ", " 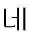 ", and " 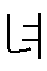 " are substituted and sequentially indicated in a previous preview at a time point when the user gesture is changed according to a change interrupt.

Next, the user releases a user gesture (in particular, a finally input second conversion interaction) input to a touch input region 150, as illustrated at reference numeral 919, for terminating input of the previous generated character " 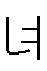 ". Then, the touch device determines that termination of character input has occurred in response to release of the second conversion interaction and input and indicates a character " 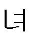 " indicated in the form of the preview 960. Next, the user inputs and releases a touch interaction in a character region to which a character " 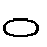 " is allocated, as illustrated at reference numeral 921, for terminating a character " 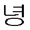 " based on the input character " 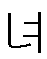 " as illustrated above. That is, the user may tap a character region of a character " 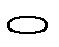 ". Then, the touch device combines a character " 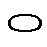 " of a character region with a character " 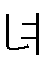 " to generate a complete character " 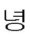 " in response to input and release of the touch interaction, and inputs and displays the generated character " 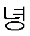 " on the display region 110. In this case, a character " 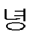 " is substituted and indicated for a previously input and displayed character " 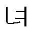 " on the display region 110.

Meanwhile, although not shown in FIGS. 9A to 9C, the user may initialize a character input operation in current progress during character input based on a user gesture as illustrated above. For example, the user may input a character " 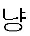 " instead of a character " 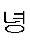 " in a state that a preview 960 of a character " 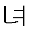 " is indicated, as illustrated in reference numeral 917. In this case, the user may initialize input of a character " 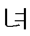 " by inputting the character " 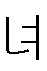 ", as illustrated in reference numeral <17, moving the second conversion interaction to a character region of a character " 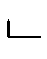 ", and waiting for a predetermined time. In this case, a preview 960 of the character " 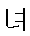 " may be omitted. Further, the user may input a character " 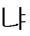 " based on a character region of " 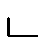 " in a user gesture input scheme for inputting a character " 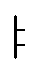 " as illustrated above.

Meanwhile, although not shown, a location of a preview is adaptively changed and indicated according to a location of a character region selected from a keypad by the user. For example, when the user inputs a touch interaction in an upper part of the touch keypad, the preview may be provided through one region of a display region 110 or through one region of a lower end of the touch input region 150. When the user inputs a touch interaction in a lower part of the touch keypad, the preview may be provided through one region of a display region 110 or through one region of a upper end of the touch input region 150. This is performed to secure a visual field for the user with respect to a user preview upon character input of the user, thereby improving intuition and convenience with respect to character input of the user through adaptive change of the preview.

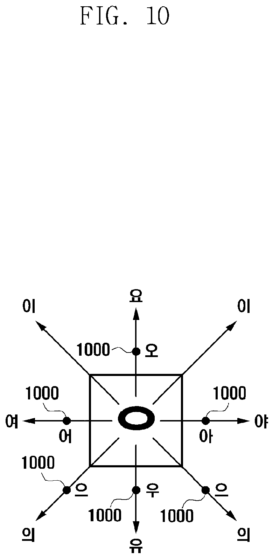

FIG. 10 is a diagram illustrating another example of a character input scheme in a touch device according to an embodiment of the present invention. In particular, FIG. 10 illustrates an example of a character input scheme using a time interval during a user gesture input in a touch device according to an embodiment of the present invention.

FIG. 10 illustrates an example of an operation of inputting a certain character (e.g., a vowel group of Hanguel) according to a user gesture input by the user. In particular, FIG. 10 illustrates an example of a case of using a time interval as a conversion point for changing an input character according to the user gesture.

Referring FIG. 10, the user may input a second interaction (drawing interaction) moving the first interaction to a peripheral direction (e.g., upward, downward, leftward, rightward, diagonal direction) in a where a first interaction (touch interaction) is input to a character region to which a certain character (e.g., " 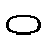 ") provided on the touch key pad. Accordingly, the user inputs a character that is a combination of a corresponding character (e.g., certain vowel group ├, ┤, ┴, ┬, —, 1 of Hanguel) previously mapped to a corresponding heading direction of the drawing interaction and the certain character (e.g., " 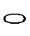 ").

For example, as illustrated in FIG. 10, the user may input a character " 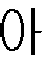 ", which is a combination of a character "├" mapped to a heading direction and a certain character " 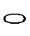 ", according to a drawing interaction input progressing in a rightward direction. Further, the user may input a character " 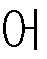 ", which is a combination of a character "┤" mapped to a progressing direction and " 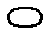 ", according to a drawing interaction input progressing in a leftward direction. Further, the user may input a character " 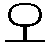 ", which is a combination of a character "┴" mapped to a heading direction and " 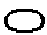 ", according to a drawing interaction input progressing in an upward direction. Further, the user inputs a character " 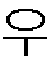 ", which is a combination of a character "┬" mapped to a heading direction and " 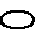 ", according to a drawing interaction input progressing in a downward direction. Moreover, the user may input a character " 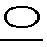 ", which is a combination of a character "—" mapped to a heading direction and " 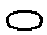 ", according to a drawing interaction input progressing in a left lower or right lower diagonal direction. In addition, the user input a character " 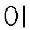 ", which is a combination of a character "l" mapped to a heading direction and " 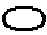 ", according to a drawing interaction input progressing in a left upper or right upper diagonal direction.

Next, the user may input a second interaction (conversion interaction) that continuously moves the drawing interaction, after stopping movement for a predetermined time in a certain point, while moving the drawing interaction of the second interaction in a corresponding direction. In this case, the certain point may correspond to a conversion point of the present invention. Accordingly, the user generates a change interrupt to stop the drawing interaction for a predetermined interval during progressing the drawing interaction, and inputs a conversion interaction that restarts the drawing interaction. Accordingly, the user inputs a character that is a combination of a corresponding character (e.g., certain vowel group 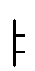 , 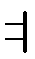 , 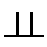 , 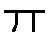 , —| of Hanguel) and the certain character (e.g., " 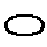 ").

For example, as illustrated in FIG. 10, the user may generate a change interrupt (i.e., stop for a predetermined time in a conversion point 1000) for changing an input character in an input state of " 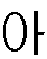 " by moving a drawing interaction of a rightward direction and then input a character " 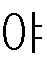 ", which is a combination of a mapped character " 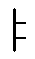 " and " 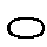 ", according to a gesture input continuously restarting movement of the drawing interaction. Further, the user may generate a change interrupt (i.e., stop in conversion point 1000 for a preset time) for changing an input character in an input state of " 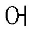 " by moving a drawing interaction in a leftward direction, and input a character " 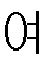 ", which is a combination of a mapped " 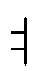 " and " 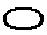 ", according to gesture input continuously restarting movement of the drawing interaction. In addition, the user may generate a change interrupt (i.e., stop in the conversion point 1000 for preset time) for changing an input character in an input state of " 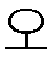 " by movement of a drawing interaction in an upward direction, and input a character " 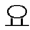 ", which is a combination of a mapped " 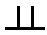 " and " 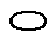 ", according to gesture input continuously restarting movement of the drawing interaction. Further, the user may generate a change interrupt (i.e., stop in a conversion point 1000 for a preset time) for changing an input character in an input state of " 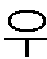 " by movement of a drawing interaction in a downward direction, and then input a character " 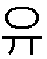 ", which is a combination of a mapped " 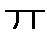 " and " 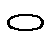 ", according to a gesture input that continuously restarts movement of the drawing interaction. In addition, the user may generate a change interrupt for changing an input character in an input state of " 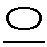 " by moving a drawing interaction in a lower-left diagonal (or lower-right diagonal) direction, and input a character " 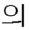 ", which is a combination of a mapped "—|" and " 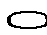 ", according to a gesture input continuously restarting movement of the drawing interaction.

Accordingly, the user inputs a conversion interaction that stops a progress of a corresponding input after a drawing interaction input as illustrated above, and extends and inputs the drawing interaction. For example, when the user inputs a drawing interaction in a rightward direction on a character region, "├" is input. After pausing with respect to the drawing interaction in an input state of "├", upon inputting a conversion interaction restarting movement of the drawing interaction, " 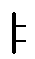 " may be input. For example, when a drawing interaction is input in a leftward direction on a character region of a character " 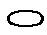 ", " 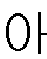 " may be generated and displayed on a display region. Further, when a conversion interaction again extending and moving the drawing interaction is continuously input after waiting for a predetermined time in a conversion point 1000, " 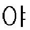 " is generated so that the " 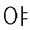 " is upgraded and displayed.

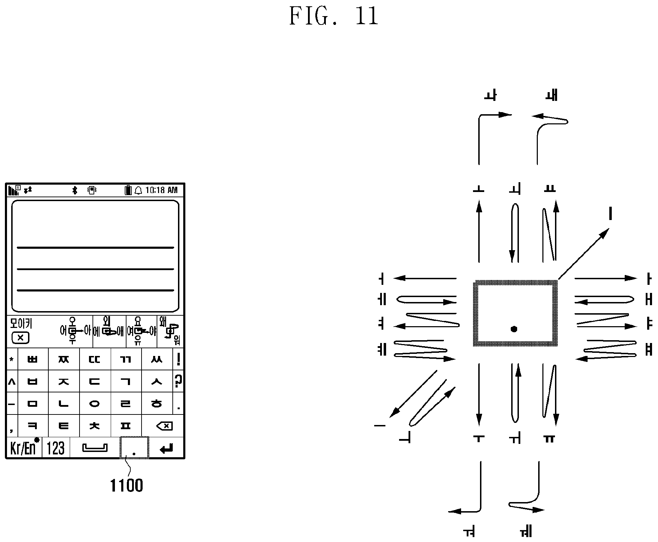

FIG. 11 is a diagram illustrating an example of an operation when an auxiliary vowel key in a touch device according to an embodiment of the present invention.

Referring to FIG. 11, according to the present invention, a touch keypad provided through a touch input region 150 arranges and displays only characters of a first character group. As illustrated in FIG. 11, the touch keypad further provides a vowel dedicated auxiliary key 1100 supporting a character input scheme with respect to a second character group by user gesture input as illustrated earlier for convenience for the user.

As shown in FIG. 11, the user performs input through a user gesture based on the vowel dedicated auxiliary key 1100, and inputs various second character groups according a user gesture input scheme as illustrated above using the vowel dedicated auxiliary key 1100. For example, after selecting a certain character of a first character group on a certain character region of a touch keypad, the user may input characters of various forms combined with the selected character of the first character group according to a user gesture input scheme using the vowel dedicated auxiliary key 1100. For example, the user may input and release a touch interaction selecting a first character of a first character group to be input from respective character regions of the touch keypad, and then may input one of a second vowel group "├", " 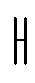 ", " 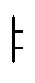 ", " 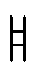 ", "┤", "┤|", " 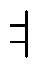 ", " 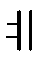 ", "┴", "┴|", " 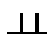 ", "┴├", " 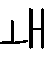 ", "┬", " 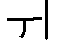 ", " 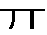 ", " 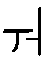 ", " 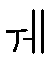 " according to a user gesture input scheme using the vowel dedicated auxiliary key 1100 to input a complete character by combining a second character with the first character.

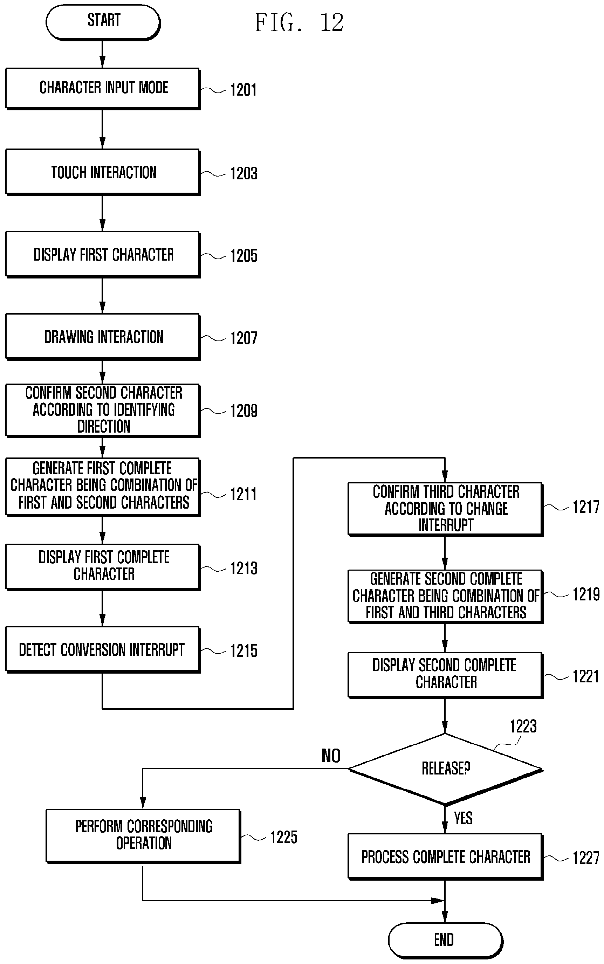

FIG. 12 is a flowchart illustrating a method for inputting a character in a touch device according to an embodiment of the present invention.

Referring to FIG. 12, a controller 500 executes a character input mode and displays a screen thereof in response to a character input request of the user, in step 1201. The controller 500 provides a screen classified into a display region 110 for displaying characters and a touch input region 150 for inputting the characters in response to a character input request of a user. Further, the touch input region 150 indicates a touch keypad on which a first character group as illustrated above, and the touch keypad selectively includes a vowel dedicated auxiliary key 1100 as described above.

Next, when a touch interaction by a certain character region in a character input mode is input in step 1203, the controller 500 displays a first character allocated to the character region in the form of a preview, in step 1205. For example, when detecting a touch interaction on a character region to which a character "¬" is allocated, the controller 500 displays the character "¬" of the character region on one of the display region 110 and the touch input region 150 in the form of a preview.

Next, when a drawing interaction moving an input point in a predetermined direction according to the touch interaction in a maintained state of the touch interaction is input, in step 1207, the controller 500 identifies a moving direction of the drawing interaction and confirms a second character according to a corresponding moving direction, in step 1209.

Next, the controller 500 combines a second character mapped to a moving direction of the drawing interaction with a first character allocated to the character region to generate a first complete character, in step 1211. Subsequently, the controller 500 displays the generated first complete character on the one of the display region 110 and the touch input region 150 in the form of a preview, in step 1213. For example, when the drawing interaction is moved to a rightward direction, the controller 500 generates a first complete character combinable by the first character "¬" and a second character "├" mapped to the rightward direction, and indicates the first complete character " 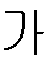 " in the form of a preview. In this case, the controller 500 removes the first character "¬" displayed in the form of a preview and displays the first complete character " 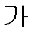 " in the form of a preview instead of the first character. If the user releases the drawing interaction on the touch key pad in the foregoing time point, the controller 500 removes a preview of the first complete character " 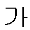 " indicated in the form of the preview from the one if the display region 110 and the touch input region 150 and inputs and displays a corresponding first complete character on the character region 110.

Next, the controller 500 detects a change interrupt in a state that a first complete character according to continuous input of the touch interaction and the drawing interaction is displayed, in step 1215. The change interrupt may correspond to an interrupt for changing a heading direction of a drawing interaction based on a certain conversion point to change a character of a second character group. One or more change interrupts may be generated according to user gesture input, and may be classified into a first change interrupt, a second change interrupt, etc., according to the number of conversion points. Further, the change interrupt may further include a drawing interaction having a time interval.

Next, when detecting the change interrupt, the controller 500 confirms a third character according to the change interrupt, in step 1217. For example, the controller 500 may confirm a first character according to a first change interaction by a first change interrupt changing a heading direction of the drawing interaction in a first conversion point, a third character according to a second change interaction by a second change interrupt changing a heading direction of the first change interaction in a second point, and a third character corresponding to change of the user gesture for changing a character such as a third change interaction by a third change interrupt changing a heading direction of the second change interrupt in a third conversion point.

Next, the controller 500 combines the third character confirmed according to the change interrupt with the first character allocated to the character region to generate a second complete character, in step 1219. Next, the controller 500 displays the second complete character generated on the one region in the form of a preview, in step 1221. For example, when the change interrupt is initially generated, the controller 500 may generate a second complete character " 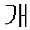 " as a combination of the first character "¬" and a third character " 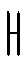 " according to a first change interaction of the initially generated change interrupt, and indicate the second complete character " 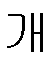 " in the form of a preview. Further, when the second change interrupt is generated, the controller 500 generates a second complete character " 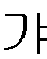 " as a combination of the first character "¬" and the third character " 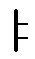 " according to the second change interaction of the second generated change interrupt. In other words, the user sequentially inputs the second other character group " 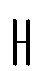 ", " 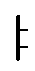 ", " 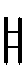 " derivable based on the second character "├" of a previously input drawing interaction according to a user gesture input scheme. Accordingly, the user may continuously input a user gesture (e.g., a drawing interaction and a conversion interaction converting and moving the drawing interaction based on a conversion point) moving corresponding to a zig-zag pattern. Then, the controller 500 combines characters " 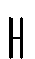 ", " 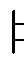 ", " 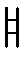 " according to variation of a next input user gesture with a previously input character "¬" to generate " 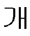 ", " 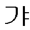 ", " 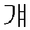 ", respectively, in response to variation in the user gesture, and sequentially indicates the generated characters " 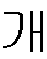 ", " 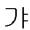 ", " 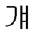 " in the form of a preview. For example, when a character " 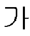 ", which is a combination of characters "¬" and "├", is displayed in the form of a preview according to a drawing interaction in a rightward direction, the drawing interaction is converted in a conversion point such that a character " 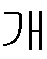 ", which is a combination of characters "¬" and " 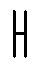 ", is displayed in the form of a preview according to a first conversion interaction moving in a leftward direction. The first conversion interaction is converted in a conversion point such that a character " 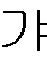 ", which is a combination of characters "¬" and " 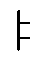 ", is displayed in the form of a preview according to a second conversion interaction moving in a rightward direction. The second conversion interaction is converted in a conversion point such that a character " 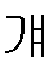 ", which is a combination of characters "¬" and " 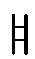 ", is displayed in the form of a preview according to a third conversion interaction moving in a leftward direction. Respective previews corresponding to the characters " 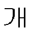 ", " 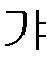 ", " 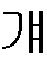 " are substituted for previous previews in a time point when the user gesture is changed according to a change interrupt and are sequentially indicated.

Next, the controller 500 may determine whether the foregoing user gesture is released after displaying the second complete character, in step 1223. For example, the controller 500 determines whether the conversion interaction is released on a touch keypad after displaying a second complete character according to the conversion interaction. When the user gesture is released, in step 1223, the controller 500 controls execution of a corresponding operation, in step 1225. For example, the controller 500 controls an operation that combines a character of a second character group according to variation in the user gesture with the first character to generate a new complete character as described above. Further, the controller 500 controls initialization of a previously progressed character input operation in response to a character input initialization request of the user. When the user gesture is released in step 1223, the controller 500 controls processing of a complete character, in step 1227. For example, the controller 500 removes a preview of a second complete character (e.g., one of " 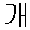 ", " 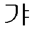 ", " 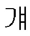 ") displayed in the form of a preview from the one region, and inputs and displays the second complete character on the display region 110.

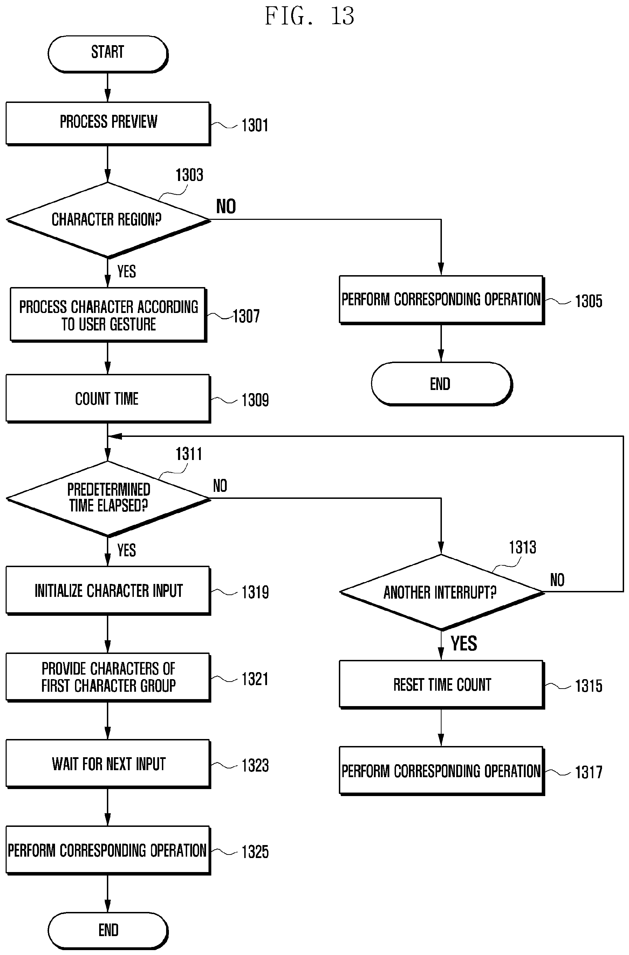

FIG. 13 is a flowchart illustrating a method for initializing character input in a touch device according to an embodiment of the present invention. In particular, FIG. 13 illustrates a processing method with respect to initialization of a corresponding character input operation in an input progress of a character according to the present invention.

Referring to FIG. 13, a controller 500 controls an input operation with respect to a certain character according to a user gesture input scheme and accordingly process a preview of a character as described above, in step 1301.

Next, the controller 500 determines whether an input point of a user gesture is located in a character region of a first character group initially selected, in step 1303. For example, the user may generate a touch interaction based on a character region to which a character " 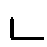 " is allocated among character regions of a touch pad, process character input combined with a second character group according to the user gesture input as illustrated above, and determine whether the user gesture is located in a character region to which the character " 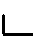 " is allocated. In this case, the user gesture located in the character region may correspond to a case where the user provides an input moving to the character region for inputting a character or moving to the character region for initialization in a state that the user is located in a periphery of the character region according to a character of a second character group to be input.

When the user gesture is not located in the character region in step 1303, the controller 500 controls execution of a corresponding operation, in step 1305. For instance, the controller 500 may process the preview with respect to a certain character, wait for a next user gesture input of a user, and process character input corresponding to the user gesture input. Further, the controller 500 may input and display a corresponding character in which character input is finally processed on a display region 110.

Next, when the user gesture is located in a character region in step 1303, the controller 500 processes a character according to a user gesture, in step 1307. For example, when the user gesture exists in a periphery of the character region a processing time point of a certain character at step 1301 and the user gesture is moved to the character region according to a conversion interrupt having a conversion point, the controller 500 processes the corresponding character input. When the user gesture is located in the character region in the processing time point of a preview of a certain character at step 1301, step 1307 is omitted and the following step 1309 is performed.

Next, when the user gesture is located in the character region, the controller 500 counts the length of time for which the user gesture is maintained, in step 1309), and determines whether the user gesture is maintained for more than a preset time, in step 1309.

When the gesture is not maintained for the preset time, in step 1311, the controller 500 determines whether there is another interrupt, in step 1313. For example, the controller 500 may determine that there is another interrupt, including a determination of whether there is movement of the user gesture before the predetermined time elapses or whether release of the user gesture is detected before the predetermined time elapses. Further, when there is no another interrupt, in step 1313, the controller 500 continuously determines whether the predetermined time elapses while continuing to count the time for which the user gesture is maintained, in step 1311. Conversely, when the another interrupt is detected in step 1313, the controller 500 resets the time counting, in step 1315, and controls execution of a corresponding operation, in step 1317. For example, the controller 500 may process character input according to movement of the user gesture or control display of the display region 110 with respect to a complete character according to release of the user gesture.

When the predetermined time for maintaining the user gesture elapses, in step 1311, the controller 500 initializes the previously input character, in step 1319, and provides only characters of a first character group, in step 1321. For example, the controller 500 initializes a preview of a certain character (e.g., a combination character of the character " 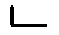 " and a character of the second character group according to the user gesture) generated according to user gesture input, and only manages characters (e.g., character " 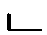 ") of the character region being a base of the certain character in a selected state. In this case, when initialization of the character input is controlled, the controller 500 removes a certain character (e.g., a combination character of the character " 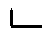 " and a character of the second character group according to the user gesture) of the preview, and selectively displays only the character (e.g., character " 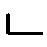 ") of the character region firstly selected in the form of a preview.

Next, the controller 500 waits for next input of the user after initialization of the character input, in step 1323, and controls execution of a corresponding operation, in step 1325. For example, the controller 500 generates a new certain character according to a user gesture input scheme based on a character (e.g., character " 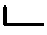 ") of the character region corresponding to new gesture input of the user after initialization of the character input to process a preview of the new certain character or cancel a character input procedure in response to a user gesture release of the user. In this case, when the user gesture is released after initialization of the character input, the controller 500 cancels a character input operation according to a character (e.g., character " 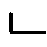 ") of the character region to wait for new input.

The foregoing method for inputting a character according to embodiments of the present invention may be implemented in an executable program command form by various computer means and be recorded in a computer readable recording medium. In this case, the computer readable recording medium may include a program command, a data file, and a data structure individually or a combination thereof. Examples of such a computer readable recording medium includes magnetic media (e.g., a hard disk, a floppy disk, or a magnetic tape), optical media (e.g., a Compact Disc Read Only Memory (CD-ROM) or a Digital Versatile Disc (DVD)), magneto-optical media such as floptical disk, and a hardware device (e.g., a Read Only Memory (ROM), Random Access Memory (RAM), and flash memory storing and executing program commands).

Further, the program command includes a machine language code created by a complier and a high-level language code executable by a computer using an interpreter. The foregoing hardware device may be configured to be operated as at least one software module to perform an operation of the present invention, and vice versa.

As mentioned above, according to a method and apparatus for inputting a character in a touch device according to embodiments of the present invention, problems caused by a limited space for character input in the touch device are resolved, the number of errors according to character input of the user is reduced, and rapid character input of the user is supported. According to embodiments of the present invention, when a character is input using the touch device, the number of inputs required to enter a character by the user is minimized such that the user may simply and rapidly input a desired character. In the present invention, when the character is input in the touch device, various complete characters may be simply input by a single gesture input operation. Embodiments of the present invention have an advantage that allows users to input various characters (e.g., all vowel groups) not covered by conventional gesture input, and usability of character input through user gestures is increased. Further, according to embodiments of the present invention a user may input a character according to a user gesture input corresponding to a character input scheme or form of a corresponding language (e.g., Hanguel), in order to improve learning according to character input, understanding and user convenience.

Embodiments of the present invention may be implemented by touch devices of various types and various devices corresponding thereto. Embodiments of the present invention may implement an optional environment for supporting a character input function in the touch device. Therefore, embodiments of the present invention may be efficiently and conveniently used during a character input function operation in the touch device to improve convenience for the user, and usability and completive force of the touch device.

While the present invention has been described with reference to certain embodiments thereof, it will be understood by those skilled in the art that various modifications in form and detail can be made therein without departing from the scope of the present invention as defined by the appended claims.

## Claims

1. A method for inputting a character, the method comprising:
displaying (1205), when a touch interaction based on a user gesture is input (1203) to a certain character region (150) in a character input mode (1201), a first character to which the certain character region is allocated;
receiving (1207), after the touch interaction is initiated (1203) and while the touch interaction is maintained (1203), a drawing interaction which is a movement in a first heading direction;
generating (1211) a first complete character by combining a second character according to the drawing interaction with the first character allocated to the character region;
displaying (1213) the generated first complete character in a form of a preview (940);
detecting (1215) a conversion interaction which is an interrupt that changes a heading direction of the drawing interaction while the generated first completed character is displayed (1213);
generating (1219) a second complete character by combining a third character according to the conversion interaction with the first character allocated to the character region (150);
displaying (1221) the generated second complete character in a form of a preview (950) by substituting the generated second complete character for the displayed first complete character; and
processing (1227), when the user gesture is released (1223) while displaying (1221) the generated second complete character, the second complete character as a completely input character.

2. The method of claim 1, wherein
the touch interaction is input to a certain character region corresponding to a first character group of a touch keypad,
the drawing interaction is an interaction in which an input point according to the touch interaction is moved in a predetermined direction, and
the conversion interaction is an interrupt that changes a heading direction of the drawing interaction at a certain conversion point (610, 630) to select a character of a second character group that is not indicated on the touch keypad.

3. The method of claim 2, wherein the conversion interaction is generated at least once according to the user gesture input, and the conversion interaction generates a plurality of conversion interactions according to the number of conversion points (610, 630) or a drawing interaction having a time interval.

4. The method of claim 1, wherein detecting (1215) the conversion interaction includes one of
a first conversion interaction according to a first conversion interaction changing a heading direction of the drawing interaction in a first conversion point (610),
a second conversion interaction according to a second conversion interaction changing a heading direction of the first conversion interaction in a second conversion point (630), and
a third conversion interaction according to a third conversion interaction changing a heading direction of the second conversion interaction in a third conversion point.

5. The method of claim 4, wherein
the third character according to the conversion interaction indicates another character of a second character group derived based on a second character of the drawing interaction previously input according to the user gesture input scheme, and
the displaying of the second complete character in the form of a preview (950) comprises combining third different characters according to the conversion interaction and sequentially displaying the combined results.

6. The method of claim 1, wherein processing (1227) the second complete character as a completely input character includes removing the preview (950) of the second complete character and inputting and displaying the second complete character on a display region (110).

7. A touch device comprising:
a touch screen (100) including a touch input region (150) for inputting a character and a display region (110) for displaying the input character; and
a controller (300) for:
selecting a character of a first character group allocated to a certain character region when a touch interaction based on a user gesture is input (1203) to the certain character region;
receiving (1207), after the touch interaction is initiated (1203) and while the touch interaction is maintained (1203), a drawing interaction which is a movement in a first heading direction;
generating (1211) a first complete character by combining a second character according to the drawing interaction with the first character allocated to the character region;
controlling the display (1213) of the generated first complete character in a form of a preview (940);
detecting (1215) a conversion interaction which is an interrupt that changes a heading direction of the drawing interaction while the generated first completed character is displayed (1213);
generating (1219) a second complete character by combining a third character according to the conversion interaction with the first character allocated to the character region;
controlling the display (1221) of the generated second complete character in a form of a preview (950) by substituting the generated second complete character for the displayed first complete character; and
processing (1227), when the user gesture is released (1223) while displaying (1221) the generated second complete character, the second complete character as a completely input character.

8. The touch device of claim 7, wherein the touch screen (100) includes a guide region (130) that provides a guide with respect to input of the user gesture.

9. The touch device of claim 7, wherein
the touch input region (150) includes a touch keypad in which the first character group is arranged, and
the touch keypad includes a space key (900) for performing a toggle function with respect to a character input scheme and a dedicated auxiliary key (1100) for inputting a second character group.

10. The touch device of claim 7, wherein the controller (300) provides a character corresponding to the user gesture input on one of the display region (110) and the touch input region (150) in a form of a preview, and inputs and indicates a corresponding character of the preview on the display region (110) when the user gesture is released.

## Patentansprüche

1. Ein Verfahren zur Eingabe eines Zeichens, wobei das Verfahren Folgendes umfasst:
Anzeigen (1205) eines ersten Zeichens, dem ein bestimmter Zeichenbereich zugewiesen wurde, wenn eine Berührungsinteraktion basierend auf einer Benutzergeste in einem Zeicheneingabemodus (1201) in den bestimmten Zeichenbereich (150) eingegeben wird (1203);
Empfangen (1207) einer Zieh-Interaktion, bei der es sich um eine Bewegung in eine erste Hauptrichtung handelt, nachdem die Berührungsinteraktion initiiert wurde (1203) und während die Berührungsinteraktion beibehalten wird (1203);
Erzeugen (1211) eines ersten vollständigen Zeichens, indem ein der Zieh-Interaktion entsprechendes zweites Zeichen mit dem ersten, dem Zeichenbereich zugewiesenen Zeichen kombiniert wird;
Anzeigen (1213) des erzeugten ersten vollständigen Zeichens in Form einer Vorschau (940);
Erkennen (1215) einer Änderungsinteraktion, bei der es sich um eine Unterbrechung handelt, welche die Hauptrichtung der Zieh-Interaktion ändert, während das erzeugte erste vollständige Zeichen angezeigt wird (1213);
Erzeugen (1219) eines zweiten vollständigen Zeichens, indem ein der Änderungsinteraktion entsprechendes drittes Zeichen mit dem ersten, dem Zeichenbereich (150) zugewiesenen Zeichen kombiniert wird;
Anzeigen (1221) des erzeugten zweiten vollständigen Zeichens in Form einer Vorschau (950), indem das erzeugte zweite vollständige Zeichen durch das angezeigte erste vollständige Zeichen ersetzt wird; und
Verarbeiten (1227) des zweiten vollständigen Zeichens als vollständig eingegebenes Zeichen, wenn die Benutzergeste freigegeben wird (1223), während das erzeugte zweite vollständige Zeichen angezeigt wird (1221).

2. Das Verfahren nach Anspruch 1, wobei
die Berührungsinteraktion in einen bestimmten Zeichenbereich eingegeben wird, der einer ersten Zeichengruppe einer berührungsempfindlichen Tastatur entspricht,
es sich bei der Zieh-Interaktion um eine Interaktion handelt, bei der ein der Berührungsinteraktion entsprechender Eingabepunkt in eine zuvor bestimmte Richtung bewegt wird, und
es sich bei der Änderungsinteraktion um eine Unterbrechung handelt, die eine Hauptrichtung der Zieh-Interaktion an einem bestimmten Änderungspunkt (610, 630) ändert, um ein Zeichen einer zweiten Zeichengruppe auszuwählen, die nicht auf der Berührungstastatur angegeben wird.

3. Das Verfahren nach Anspruch 2, wobei die Änderungsinteraktion mindestens einmal entsprechend der Benutzergesteneingabe erzeugt wird und wobei die Änderungsinteraktion eine Vielzahl von Änderungsinteraktionen entsprechend der Anzahl an Änderungspunkten (610, 630) oder eine Zieh-Interaktion mit einem Zeitintervall erzeugt.

4. Das Verfahren nach Anspruch 1, wobei die Erkennung (1215) der Änderungsinteraktionen eine der folgenden Interaktionen umfasst:
eine erste Änderungsinteraktion entsprechend einer ersten Änderungsinteraktion, die eine Hauptrichtung der Zieh-Interaktion an einem ersten Änderungspunkt (610) ändert,
eine zweite Änderungsinteraktion entsprechend einer zweiten Änderungsinteraktion, die eine Hauptrichtung der ersten Änderungsinteraktion an einem zweiten Änderungspunkt (630) ändert, und
eine dritte Änderungsinteraktion entsprechend einer dritten Änderungsinteraktion, die eine Hauptrichtung der zweiten Änderungsinteraktion an einem dritten Änderungspunkt ändert.

5. Das Verfahren nach Anspruch 4, wobei
das der Änderungsinteraktion entsprechende dritte Zeichen ein anderes Zeichen einer zweiten Zeichengruppe angibt, die basierend auf einem zweiten Zeichen der zuvor entsprechend dem Eingabeschema der Benutzergeste eingegebenen Zieh-Interaktion abgeleitet wird, und
die Anzeige des zweiten vollständigen Zeichens in Form einer Vorschau (950) umfasst, dass andere dritte Zeichen entsprechend der Änderungsinteraktion kombiniert werden und die kombinierten Ergebnisse nacheinander angezeigt werden.

6. Das Verfahren nach Anspruch 1, wobei die Verarbeitung (1227) des zweiten vollständigen Zeichens als vollständig eingegebenes Zeichen umfasst, dass die Vorschau (950) des zweiten vollständigen Zeichens entfernt wird und das zweite vollständige Zeichen in einen Anzeigebereich (110) eingegeben und auf diesem angezeigt wird.

7. Eine Berührungsvorrichtung, die Folgendes umfasst:
einen Berührungsbildschirm (100) einschließlich eines Berührungseingabebereichs (150) zur Eingabe eines Zeichens und eines Anzeigebereichs (110) zur Anzeige des eingegebenen Zeichens; und
eine Steuereinheit (300), die für folgende Zwecke eingerichtet ist:
Auswählen eines Zeichens einer ersten Zeichengruppe, die einem bestimmten Zeichenbereich zugewiesen wurde, wenn eine Berührungsinteraktion basierend auf einer Benutzergeste in den bestimmten Zeichenbereich eingegeben wird (1203);
Empfangen (1207) einer Zieh-Interaktion, bei der es sich um eine Bewegung in eine erste Hauptrichtung handelt, nachdem die Berührungsinteraktion initiiert wurde (1203) und während die Berührungsinteraktion beibehalten wird (1203);
Erzeugen (1211) eines ersten vollständigen Zeichens, indem ein der Zieh-Interaktion entsprechendes zweites Zeichen mit dem ersten, dem Zeichenbereich zugewiesenen Zeichen kombiniert wird;
Steuern der Anzeige (1213) des erzeugten ersten vollständigen Zeichens in Form einer Vorschau (940);
Erkennen (1215) einer Änderungsinteraktion, bei der es sich um eine Unterbrechung handelt, welche die Hauptrichtung der Zieh-Interaktion ändert, während das erzeugte erste vollständige Zeichen angezeigt wird (1213);
Erzeugen (1219) eines zweiten vollständigen Zeichens, indem ein der Änderungsinteraktion entsprechendes drittes Zeichen mit dem ersten, dem Zeichenbereich zugewiesenen Zeichen kombiniert wird;
Steuern der Anzeige (1221) des erzeugten zweiten vollständigen Zeichens in Form einer Vorschau (950), indem das erzeugte zweite vollständige Zeichen durch das angezeigte erste vollständige Zeichen ersetzt wird; und
Verarbeiten (1227) des zweiten vollständigen Zeichens als vollständig eingegebenes Zeichen, wenn die Benutzergeste freigegeben wird (1223), während das erzeugte zweite vollständige Zeichen angezeigt wird (1221).

8. Die Berührungsvorrichtung nach Anspruch 7, wobei der Berührungsbildschirm (100) einen Anleitungsbereich (130) umfasst, der eine Anleitung bezüglich der Eingabe der Benutzergeste bereitstellt.

9. Die Berührungsvorrichtung nach Anspruch 7, wobei
der Berührungseingabebereich (150) eine berührungsempfindliche Tastatur umfasst, in der die erste Zeichengruppe angeordnet ist, und
die berührungsempfindliche Tastatur eine Leertaste (900) zur Durchführung einer Umschaltfunktion in Bezug auf ein Zeicheneingabeschema und eine spezifische Zusatztaste (1100) zur Eingabe einer zweiten Zeichengruppe umfasst.

10. Die Berührungsvorrichtung nach Anspruch 7, wobei die Steuereinheit (300) ein der Benutzergesteneingabe entsprechendes Zeichen in Form einer Vorschau auf dem Anzeigebereich (110) oder dem Berührungseingabebereich (150) bereitstellt, und wobei sie ein entsprechendes Zeichen der Vorschau in den Anzeigebereich (110) eingibt und das Zeichen in diesem angibt, wenn die Benutzergeste freigegeben wird.

## Revendications

1. Un procédé de saisie d'un caractère, le procédé comprenant :
l'affichage (1205), lorsqu'une interaction de contact tactile basée sur un geste d'utilisateur est entrée (1203) dans une zone de caractère donnée (150) dans un mode de saisie de caractère (1201), d'un premier caractère auquel la zone de caractère donnée est attribuée,
la réception (1207), après le lancement de l'interaction de contact tactile (1203) et pendant le maintien de l'interaction de contact tactile (1203), d'une interaction de traçage qui est un déplacement dans une première direction de cap,
la génération (1211) d'un premier caractère complet par la combinaison d'un deuxième caractère en fonction de l'interaction de traçage avec le premier caractère attribué à la zone de caractère,
l'affichage (1213) du premier caractère complet généré sous la forme d'une prévisualisation (940),
la détection (1215) d'une interaction de conversion qui est une interruption qui modifie une direction de cap de l'interaction de traçage pendant que le premier caractère complet généré est affiché (1213),
la génération (1219) d'un deuxième caractère complet par la combinaison d'un troisième caractère en fonction de l'interaction de conversion avec le premier caractère attribué à la zone de caractère (150),
l'affichage (1221) du deuxième caractère complet généré sous la forme d'une prévisualisation (950) par la substitution du deuxième caractère complet généré par le premier caractère complet affiché, et
le traitement (1227), lorsque le geste d'utilisateur est libéré (1223) pendant l'affichage (1221) du deuxième caractère complet généré, du deuxième caractère complet sous la forme d'un caractère totalement saisi.

2. Le procédé selon la Revendication 1, où
l'interaction de contact tactile est entrée dans une zone de caractère donnée correspondant à un premier groupe de caractères d'un clavier tactile,
l'interaction de traçage est une interaction dans laquelle un point d'entrée en fonction de l'interaction de contact tactile est déplacé dans une direction prédéterminée, et
l'interaction de conversion est une interruption qui modifie une direction de cap de l'interaction de traçage à un point de conversion donné (610, 630) de façon à sélectionner un caractère d'un deuxième groupe de caractères qui n'est pas indiqué sur le clavier tactile.

3. Le procédé selon la Revendication 2, où l'interaction de conversion est générée au moins une fois en fonction du geste d'utilisateur entré, et l'interaction de conversion génère une pluralité d'interactions de conversion en fonction du nombre de points de conversion (610, 630) ou d'une interaction de traçage possédant un intervalle temporel.

4. Le procédé selon la Revendication 1, où la détection (1215) de l'interaction de conversion comprend une opération parmi
une première interaction de conversion en fonction d'une première interaction de conversion qui modifie une direction de cap de l'interaction de traçage dans un premier point de conversion (610),
une deuxième interaction de conversion en fonction d'une deuxième interaction de conversion qui modifie une direction de cap de la première interaction de conversion dans un deuxième point de conversion (630), et
une troisième interaction de conversion en fonction d'une troisième interaction de conversion qui modifie une direction de cap de la deuxième interaction de conversion dans un troisième point de conversion.

5. Le procédé selon la Revendication 4, où
le troisième caractère en fonction de l'interaction de conversion indique un autre caractère d'un deuxième groupe de caractères dérivé en fonction d'un deuxième caractère de l'interaction de traçage saisi antérieurement en fonction du mécanisme d'entrée de geste d'utilisateur, et
l'affichage du deuxième caractère complet sous la forme d'une prévisualisation (950) comprend la combinaison de troisièmes caractères différents en fonction de l'interaction de conversion, et l'affichage séquentiel des résultats combinés.

6. Le procédé selon la Revendication 1, où le traitement (1227) du deuxième caractère complet sous la forme d'un caractère totalement saisi comprend la suppression de la prévisualisation (950) du deuxième caractère complet et la saisie et l'affichage du deuxième caractère complet sur une zone d'affichage (110).

7. Un dispositif tactile comprenant :
un écran tactile (100) comprenant une zone d'entrée tactile (150) destinée à la saisie d'un caractère et une zone d'affichage (110) destinée à l'affichage du caractère saisi, et
un dispositif de commande (300) destiné à :
la sélection d'un caractère d'un premier groupe de caractères attribué à une zone de caractère donnée lorsqu'une interaction de contact tactile basée sur un geste d'utilisateur est entrée (1203) dans la zone de caractère donnée,
la réception (1207), après le lancement de l'interaction de contact tactile (1203) et pendant le maintien de l'interaction de contact tactile (1203), d'une interaction de traçage qui est un déplacement dans une première direction de cap,
la génération (1211) d'un premier caractère complet par la combinaison d'un deuxième caractère en fonction de l'interaction de traçage avec le premier caractère attribué à la zone de caractère,
la commande de l'affichage (1213) du premier caractère complet généré sous la forme d'une prévisualisation (940),
la détection (1215) d'une interaction de conversion qui est une interruption qui modifie une direction de cap de l'interaction de traçage pendant que le premier caractère complet généré est affiché (1213),
la génération (1219) d'un deuxième caractère complet par la combinaison d'un troisième caractère en fonction de l'interaction de conversion avec le premier caractère attribué à la zone de caractère,
la commande de l'affichage (1221) du deuxième caractère complet généré sous la forme d'une prévisualisation (950) par la substitution du deuxième caractère complet généré par le premier caractère complet affiché, et
le traitement (1227), lorsque le geste d'utilisateur est libéré (1223) pendant l'affichage (1221) du deuxième caractère complet généré, du deuxième caractère complet sous la forme d'un caractère totalement saisi.

8. Le dispositif tactile selon la Revendication 7, où l'écran tactile (100) comprend une zone de guidage (130) qui fournit un guide par rapport à l'entrée du geste d'utilisateur.

9. Le dispositif tactile selon la Revendication 7, où
la zone d'entrée tactile (150) comprend un clavier tactile dans lequel le premier groupe de caractères est agencé, et
le clavier tactile comprend un touche d'espace (900) destinée à l'exécution d'une fonction de bascule par rapport à un mécanisme de saisie de caractère et une touche auxiliaire dédiée (1100) destinée à la saisie d'un deuxième groupe de caractères.

10. Le dispositif tactile selon la Revendication 7, où le dispositif de commande (300) fournit un caractère correspondant au geste d'utilisateur entré dans une zone parmi la zone d'affichage (110) et la zone d'entrée tactile (150) sous la forme d'une prévisualisation et saisit et indique un caractère correspondant de la prévisualisation sur la zone d'affichage (110) lorsque le geste d'utilisateur est libéré.
